# EUROPEAN PATENT APPLICATION

(11) **EP 4 495 643 A1**
(43) Date of publication of application: **22.01.2025**
(21) Application number: 23386114.5
(22) Date of filing: 09.11.2023
(51) Int. Cl.: G02B 6/10

(54) **LIGHT COUPLING BETWEEN NANOWIRE AND OPTICAL WAVEGUIDE BY MICROSPHERE PHOTONIC NANOJET**

(30) Priority: 17.07.2023 GR 20230100588
(71) Applicant: National Hellenic Research Foundation (NHRF), 11635 Athens (GR)
(72) Inventor: Riziotis, Christos, 11635 Athens (GR)
(74) Representative: Vavekis, Konstantinos

(57) **Abstract**

The invention presents a light coupling system and design method for highly efficient coupling of Nanowires or Nanowires with embedded Quantum Dots (NWQDs) to optical waveguides. A mesoscale optical dielectric microelement, like a dielectric microsphere (or alternatively half-sphere, cylinder, half-cylinder of mesoscale dimensions) is placed between the nanowire and the optical waveguide, with optimized: 1) Size (diameter) and 2) Refractive index of microsphere, 3) Distance between the nanowire and the microsphere, 4) Distance between microsphere and waveguide. The photonic nanojet emitted by the microsphere excites efficiently the guided eigenmode(s) of the input waveguide. Application of the method has been demonstrated in the case of directly laser written waveguides of low refractive index contrast in silica and silica-on-silicon platforms. The invention is expected to have a high impact in Quantum technology such as optical quantum computers.

## Description

### TECHNICAL FIELD OF THE INVENTION

The invention relates to the integration of single photon sources in optical waveguides for the development of hybrid quantum optical circuits and devices for quantum manipulation and processing of single photons towards quantum computing, communications and sensing applications. One major category of single photon sources is based on quantum dots that are embedded in semiconductor optical nanowires and this invention describes a method for the efficient light coupling of optical nanowires in optical waveguides, which is a critical issue in the efficient integration of quantum sources and the development of scalable quantum circuits with multiple single photon sources and multiple qubits for quantum computing, sensors and quantum communication systems.

### BACKGROUND OF THE INVENTION

Optical integrated circuits is a major photonics platform that allows the fabrication of optical waveguide based components and devices in a single chip and offer miniaturization, scalability, loss and phase stability, in contrast to the standard bulkier free space optical systems. Quantum photonics is the most promising technology in quantum information and computing, quantum sensing, and quantum communication systems, which is supported by the development of quantum photonic integrated circuit (QPIC) platforms for the implementation of the linear optics quantum computers (LOQC). Photonic integrated circuits (PICs) enhance their functionality by the advanced optical techniques for on-chip manipulation of the quantum states of light, however, the challenge to develop a complete and efficient photonic integrated circuit remains open. Therefore most approaches lay on the implementation of different and specialized materials and components forming a rather hybrid platform, combining various components from different platforms.

The major current limitation in quantum technology and quantum computers implementation is the lack of scalability. Therefore QPICs require an input or multiple inputs of multiple single photons, and these are generated at present mostly by the highly inefficient process (and probabilistic in nature) of parametric down conversion in nonlinear optical waveguides. Integration of single photon sources on chip is crucial step for scalable quantum circuits and computers. Advances in single photon sources have led on incorporation of Semiconductor quantum dot (QD) in the PIC chip, acting as the single photon and entangled photons generation sources, stationary qubits, and deterministically-operated quantum gates. Those QD-based single-photon sources are suitable for on-demand single photon generation as they have an additional advantage for on-chip electrical excitation and wavelength tunable entangled photon emission and are therefore attractive for on-chip quantum optical applications. However due to their nanometer size there are obvious challenges to realize the deterministic integration of QDs in quantum photonic circuits.

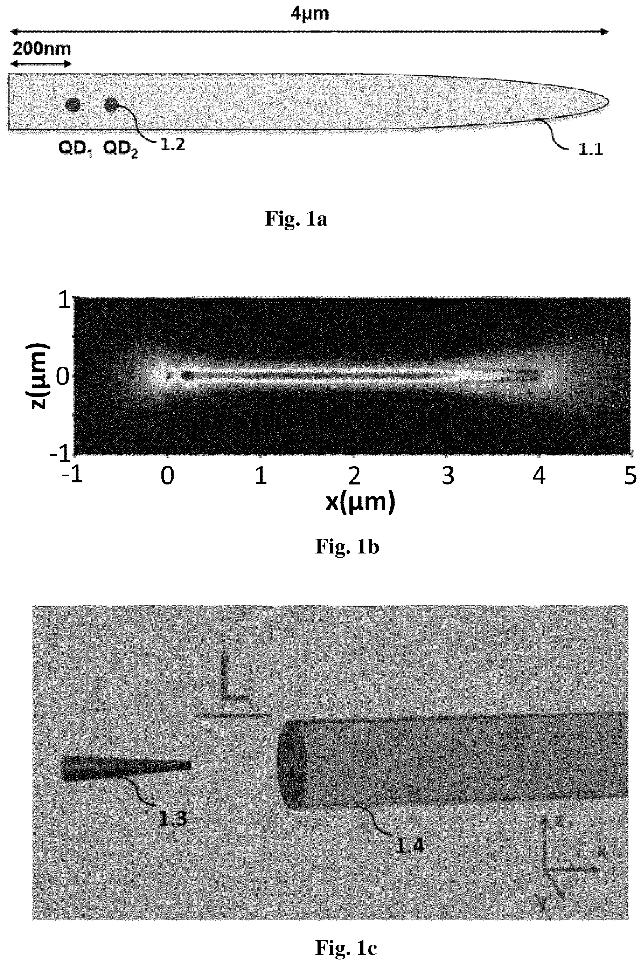

By embedding the quantum dot (QD) in a photonic nanowire (NW), the QD's emission is coupled to the nanowire's fundamental waveguide eigenmode leading to an emission with a Gaussian profile, and thus making the nanowire quantum dot (NWQD) suitable for specific types of PICs as it can be actively coupled internally or to external waveguides. Nanowires are quasi one-dimensional structures that are grown with a bottom-up technique enabling the controlled growth of an individual heterostructured quantum dot on the nanowire axis. NWQD can be deterministically embedded in photonic circuits as integrated hybrid quantum emitters as their length is in order of few to several micrometers and can be manipulated by standard micromanipulation techniques. However, NWQD direct integration has been demonstrated until today only in silicon and silicon nitride integrated platform due to the compatibility of the corresponding waveguide dimensions and refractive indices with the NWQD waveguides, and consequently to the similarity of the dimensions of their guided mode profiles that result in efficient overlap. This compatibility allows the efficient coupling to a degree of >20% which is adequate for practical implementations. Figure **1a** provides a schematic diagram showing the structure of a nanowire **1.1** with an embedded quantum dot **1.2** of typical dimensions. In Figure **1b** is shown schematically the electric field propagation along the nanowire axis after the QD excitation. Figure **1c** is a schematic diagram showing the arrangement of a nanowire (or NWQD) **1.3,** at launching position, related to a cylindrical waveguide **1.4** embedded in a homogeneous medium representing the generic case of optical coupling arrangement applicable in fiber or integrated optics platforms.

However, the characteristics of semiconductor integrated circuits is incompatible to silica based optical fibers inducing very high insertion loss, which is critically limiting issue in quantum applications. Also the manufacturing process by Electron Beam Lithography, Focused Ion Beam, and Reactive Ion Etching sets strict limitations on the manufacturing flexibility, rapid customization and the complexity of on-chip components density in contrast to other platforms like silica on silicon. Therefore, despite the recent partial transition from bulk table-top optics of quantum implementation to integrated circuits there are still several limitations on current approaches. In silica platform there have been demonstrated quantum circuits operated only with single photons produced by off-chip parametric down conversion in nonlinear optical waveguides thus limiting the photons visibility and performance. This also limits the scalability by not providing means of multiple embedded single photon sources on chip.

Nanowires or NWQD integration in silica or silica on silicon optical waveguides has not been possible until now due to major incompatibility issues between the material, optical and waveguiding properties of semiconductor nanowires and silica based waveguides. Furthermore, an important method of fabrication silica based optical circuits is by Direct Laser Writing (DLW), by excimer Lasers, femtosecond Laser, Ultraviolet Laser, where the laser induced refractive index modification defines channel optical waveguides, thus allowing the rapid customization and fabrication of complex highly functional optical circuits and chips. However, this DLW method creates optical waveguides of low refractive index change (typical refractive index increase <5*10⁻³) of low or medium optical confinement and typical waveguide mode diameter larger than 5 µm setting additional incompatibility and restrictive issues for NWQD coupling to Laser written waveguides. Similar wave guiding characteristics are also apparent in buried in-diffused waveguides fabricated by other chemical and physical techniques different to laser writing. In such low refractive index contrast and low confinement optical waveguides (buried diffused waveguides or laser written waveguides) the modal characteristics are highly different in terms of numerical aperture, waveguide's modal size, refractive index, and consequently are highly incompatible to NWQD for efficient coupling.

The current unsolvable until now problem, due to incompatibility of NWQD to such Laser written low refractive index contrast or low confinement channel optical waveguides in silica, is the extremely poor light coupling, from nanowires in general or NWQD, to channel optical waveguides to below 4%, thus making impractical the integration of single photon sources on chips.

However, the availability of technical means for the development of highly customized and optimally designed optical circuits fabricated by rapid prototyping techniques like Direct Laser Writing sets a high demand for such circuits in quantum technology and computation. The low refractive index contrast in laser written waveguides in silica-based materials creates a challenge for NWQD integration in such waveguides and this invention provides a solution for efficient integration and development of quantum integrated circuits with embedded single photon sources.

### DESCRIPTION OF THE INVENTION

The present invention provides a new method and describes a new light coupling system and apparatus for light coupling between an optical nanowire and an optical waveguide by the use of an optical dielectric microelement which is preferably a microsphere, (or other optical microelement selected from cylinder, or half-sphere, or half-cylinder), that is placed between the nanowire and the optical waveguide, and preferably it is aligned with them in an axial direction defined by the central axis of optical waveguide and the nanowire central axis. For a specified optical nanowire and a specified channel optical waveguide, the microelement can be appropriately designed, after providing light coupling calculations by means of numerical physical model simulations of the light coupling system, and selected in terms of characteristics, such as: i) microelement refractive index, ii) microelement dimensions, and arranged properly in terms of: iii) geometrical separation between the nanowire and the microsphere, iv) geometrical separation between the microelement and the waveguide, in order to achieve the maximum light coupling from the nanowire to the optical waveguide.

The illumination of the microsphere, or of a proper optical microelement, by the light ejected by the nanowire creates a transformed light beam (in the shadow side of the microsphere) that has proper spatial and intensity characteristics that allow the excitation of the channel optical waveguide and the efficient light coupling ("light coupling" will be also referred for brevity as "coupling" in the following text) in the adjacent waveguide propagated as low loss supported fundamental waveguide eigenmode.

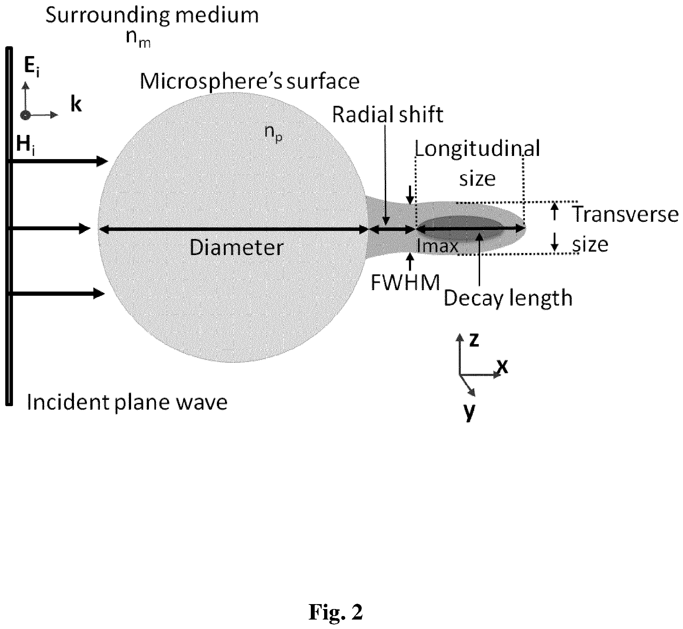

Existing literature dictates that when the size of the sphere is on the order of the wavelength of light, neither Rayleigh scattering formalism nor geometrical optics approximation can accurately describe their interaction with light. However, Mie theory provides the full description of interaction of light with wavelength λ with spherical particles with arbitrary sizes. Therefore, by employing Mie theory it can be shown the field enhancement by dielectric spheres transforms from a dipole structure in Rayleigh scattering regime (R<<λ) to a jet-like structure in mesoscale spheres (with radius R spanning from 1λ -30λ), namely photonic nanojet. It has shown that under certain combinations of size and refractive index of an optical dielectric microelement (shaped as cylinder or sphere) and the wavelength of the illuminating light, when the light beam is focused just on or close to the 'shadow-side' surface of the optical dielectric microelement, a physical phenomenon occurs due to the near-field interactions of the optical microelement's boundary and the focused beam. In that case, a highly localized electromagnetic beam at the shadow-side surface of the optical dielectric microelement is created and termed as a "photonic nanojet". The spatial characteristics of a photonic nanojet can be adjusted since they depend on the microsphere size, the refractive indices of microsphere and surrounding material and the wavelength of the light. Photonic nanojets are essentially scattered beams of light with a high-intensity main lobe, a weak subdiffracting waist and a very low divergence angle as shown schematically in Figure 2 where a microsphere illuminated by an optical plane wave generating a spatially restricted optical beam with specific characteristics like longitudinal size, transverse size decay length and a beam radial dimension.

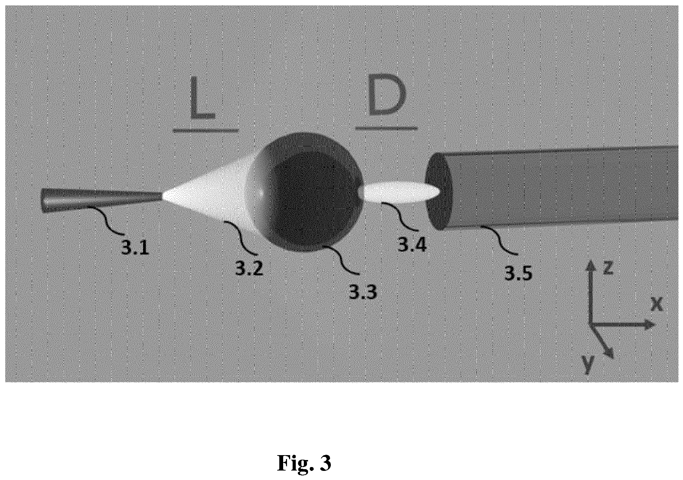

In Figure 3 it is presented the schematic arrangement of the proposed light coupling system of this invention, showing the optical arrangement between a given, specified, nanowire (or NWQD) **3.1** with creates an illuminating light beam **3.2,** a properly designed microsphere **3.3** and a given, specified, channel optical waveguide **3.5.** The separation between the end tip of nanowire (or NWQD) and the adjacent surface of the microsphere is L, while the separation between the surface of the microsphere adjacent to the end of the waveguide, and the waveguide is D. For a properly designed arrangement, the photonic nanojet **3.4** emitted by the microsphere induces proper launching conditions in the vicinity of the adjacent channel optical waveguide leading to proper excitation of the waveguide's supported guided optical modes resulting in efficient coupling of nanowire's emitted light to waveguide's guided light at the fundamental or other higher guided eigenmodes.

Until today, in the current state of the art, it was not never conceived the idea or applied in practice the employment of microsphere (or an optical dielectric microelement in general) in order to create a photonic nanojet in order to launch and couple light in a waveguide, or even more specifically to launch light in a waveguide when illuminated by a nanowire or by a nanowire with a quantum dot acting as single photon source. It should be noted that photonic nanojets were studied and demonstrated only in the following cases and applications: Enhanced Raman spectroscopy, Photolithography, Nanoparticle detection and manipulation, Enhanced optical absorption in photovoltaics and photodiodes, Laser materials processing and dry laser cleaning, Fluorescence sensing , high -density optical data storage, and novel light transport in linear arrays of microspheres, and not for coupling light to waveguides as described and demonstrated in this invention.

The invented coupling system and method is based on this excitation of waveguides by the induced photonic nanojet. The microsphere does not act as a focussing ball lens that concentrates light into a single point, as it happens in other focussing techniques when using focussing balls of dimensions much greater of 30*λ determined my geometrical optics principles with a well defined optical focal point.

The photonic jet cannot be described by a single focal point (position and dimension) as it is an electromagnetic beam with certain spatial distribution and light intensity characteristics. Therefore, the design and optimization of coupling through a photonic jet is also entirely different, not trivial, not obvious, and here in this invention is the first time a photonic nanojet is employed for coupling light in an optical waveguide as is demonstrated in specific cases.

Due to complex description of the characteristics of the photonic nanojet the excitation procedure of the guided modes in the ejected waveguide is also complex and cannot be described by simple design rules as in the case of geometrical optic with focusing spherical dielectric ball lenses. The generation of the photonic jet and the interaction in the waveguide can be accurately described by means of electromagnetic numerical simulations based on Finite Difference Time Domain (FDTD) or Finite Element Methods (FEM) where in properly discretized mesh, of the entire photonic structure, and with proper boundary conditions, is calculated based on Maxwell Electromagnetic equations, the propagation of light or propagating supported eigenmodes in the photonic structure. Such well known techniques FDTD and FEM were employed for the study and validation of the invented method here.

The design of the arrangement of microsphere in between a nanowire (or NWQD) and a specified optical waveguide is based primarily on the appropriate design and selection of: 1) Size (diameter) of the optical microelement (microsphere), 2) Refractive index of optical microelement (microsphere, 3) Distance between the nanowire and the optical microelement (microsphere), 4) Distance between optical microelement (microsphere) and waveguide. The selection of the aforementioned parameters depends on the refractive index, geometrical dimensions and waveguiding characteristics of the waveguide, the characteristics of the nanowire and of the refractive index of the surrounding media.

To measure the size and refractive index of optical dielectric microspheres, various techniques can be employed. Dynamic Light Scattering (DLS) is a common method used for size measurement, which analyzes the intensity fluctuations of scattered light caused by Brownian motion. The Coulter principle, also known as electrical sensing zone method, is another technique used for size determination. It involves passing the microsphere suspension through a small orifice and measuring the change in electrical impedance as the microspheres pass through. This allows for the calculation of the size distribution based on the volume or number of microspheres. Additionally, optical microscopy and scanning electron microscopy (SEM) are imaging-based techniques that allow for direct visualization and size measurement of microspheres via image and statistical analysis. On the other hand, refractive index measurement can be performed using a refractometer, which analyzes the behavior of light passing through or interacting with the microspheres, or by ellipsometry techniques that measure the changes in the polarization of light as it interacts with the microspheres.

Other parameters affecting also the light coupling efficiency in the proposed methods and are taken into account for the determination of the maximum design coupling. These parameters determine the tolerances of the design and are: 1) Degree of sphericity of the microsphere, 2) Angle of axis of the nanowire to the central axis of the microsphere that is aligned to the central axis of the waveguide, thus inducing a misalignment, 3) Transverse (Z- direction) displacement of the nanowire (NWQD), 4) Lateral (Y- Direction) displacement of the nanowire (NWQD).

The method is reliable, robust and tolerant in terms of the aforementioned various imperfections as it is proved practically feasible to accurately determine and achieve the required positions given the current state of the art tools, like nano/micro manipulators for accurate handling of such elements, nanowires, and microspheres.

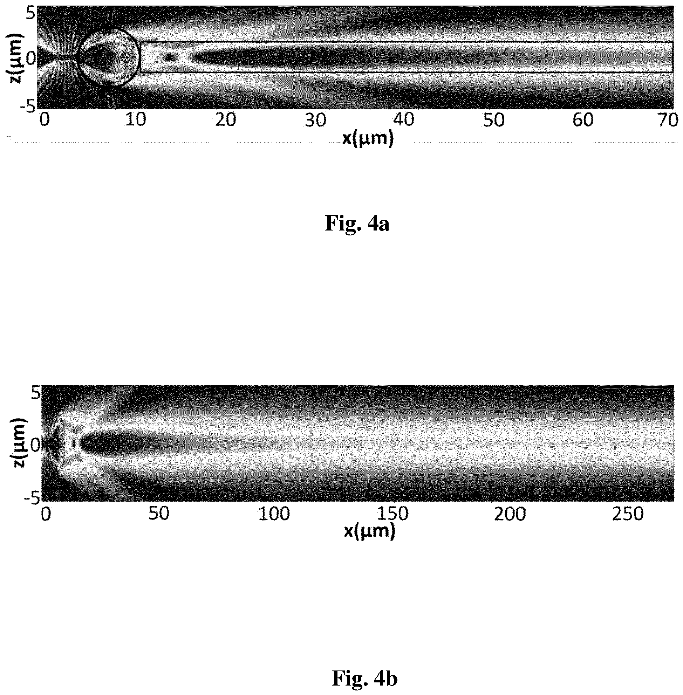

Figure **4** shows schematically the successful light coupling to a waveguide by the use of an optimally designed arrangement between the nanowire (or NWQD), the microsphere and the waveguide (microsphere with diameter 6µm, refractive index n=1.9 and distance from nanowire L=0µm). Figure **4a** shows the creation of the photonic nanojet after illumination of the NWQD on the microsphere which is shown as a circle, and the coupling of light in the waveguide for a propagation distance of 70µm. Figure **4b** demonstrates the efficient coupling and lossless propagation of coupled guided light (Transverse Electric - TE mode) for a distance of 300µm in the waveguide. Due to dimensions scaling the microsphere is not shown. It should be noted that the color representation and intensity scaling is different between two graphs in order to reveal the electric field propagation details.

The invented method could be employed and realised in a number of photonics materials platforms such as Silica, Silica on Silicon, Silicon, Silicon Nitride, Silicon on Insulator, Polymers, Tantalum Pentoxide, Lithium Niobate, or any combinations of these materials, for enhancing the coupling performance in various embedding geometries of NWQD.

The proposed inclusion of microsphere could be applied also in a number of different types of waveguides such as, Rib Waveguides, Ridge waveguides, Stripe waveguides, and buried waveguides. It can be applied also to a number of types of waveguides fabricated by different means, like: Direct Laser Writing, Reactive Ion Etching (RIE), Electron Beam Lithography, Focussed Ion Beam lithography, In-diffusion, etc.

The method solves a very challenging problem and the solution is expected to have a high impact in Quantum technology due to the interest of developing optical computers based on highly customised hybrid optical circuits.

Due to the fact that it cannot be provided generic design engineering rules for the optimum selection of microspheres and the optimum optical arrangement of the triplet of the three photonic elements **[Nanowire** - **Microsphere** - **Waveguide],** specific cases will be provided in the following section to demonstrate the applicability and the efficiency of the proposed method in this invention.

The invention solves the fundamental problem of coupling light from a nanowire to an optical channel optical waveguide with dissimilar and incompatible waveguiding characteristics. The incompatibility of nanowires to low index contrast waveguides is attributed to the dimensions of the nanowire and the resulted mode profile at the end tip of the nanowire which acts as very narrow waveguide. The modal waveguiding characteristics depend on the geometric and material characteristics of the nanowire and not of the presence of embedded QD which offers an additional functionality in quantum applications as a single photon source. Therefore this invention provides a solution first, in the generic case of a nanowire coupling which is applied afterwards to various nanowires with or without quantum dots that have significant impact in quantum applications.

**In summary,** the invention discloses a light coupling system comprising a nanowire (or a nanowire quantum dot), an optical dielectric microelement and a channel optical waveguide, wherein the optical dielectric microelement is placed, between the nanowire and the channel optical waveguide, preferably aligned in the axial direction of the central axis of the channel optical waveguide and the nanowire axis, and the said optical dielectric microelement is configured to enable the coupling and transfer of light from the nanowire (or a NWQD) to the channel optical waveguide. In different embodiments, such said optical channel waveguides can be related to optical fiber based waveguides, or planar integrated based optical waveguides. In different embodiments, different optical dielectric microelements, with circular or semi-circular cross sections, are used such as a dielectric microsphere, or with shapes as a cylinder, or a half-sphere or a half-cylinder with mesoscale dimensions spanning from 1λ to 30λ for operation with light at wavelength equal to λ. In another embodiment the refractive index of the optical dielectric microelement has a value between 1.5 and 2.5 and can be fabricated by readily and commercially available materials such as Polystyrene (n=1.6), Alumina (Al₂O₃, n_{Al}=1.76), Barium Titanate (n_{Ba}=1.9, 2.2) or Titania (n_{Ti}=2.5). In another embodiment wherein the optical dielectric microelement is a dielectric microsphere can have a diameter between 2 µm and 45 µm and more preferably between 3 µm and 15 µm. The optical dielectric microelement couples and transfers light from a semiconductor nanowire with one or more quantum dots or without any quantum dots to the channel optical waveguide. In another embodiment the channel optical waveguide is fabricated in different material platforms such as in made of Silica, Silica on Silicon, Silicon, Silicon on Insulator, Silicon Nitride, Lithium Niobate, Tantalum Pentoxide, Polymers, or in any combination of them forming hybrid photonic platforms thereof. In another embodiment there is a light coupling apparatus and coupling method where the channel optical waveguides have any of different shape selected from as like: a Ridge waveguide, a Rib Waveguide, a Stripe waveguide, or buried waveguides. In another embodiment there is a light coupling system where the channel optical waveguides have been fabricated by any of fabrication means, like Reactive Ion Etching, Focused Ion Beam, Electron Beam Lithography, In-diffusion or, Direct Laser writing or by any combination of them in the same optical integrated circuit or in hybrid optical integrated implementations. In another embodiment there is a light coupling system and coupling method wherein the nanowire is made by silicon, semiconductor, dielectric or metallic materials than can have also different functionality. In the said embodiment, semiconductor nanowires can be based in different materials like GaAs, InP, GaAs, GaP, GaN, GaAs, GaN, while semiconductor nanowires with embedded quantum dots can be implemented by the following materials combination pairs assigned as [Quantum Dot / Nanowire]: InAs/GaAs, InAsP/InP, AlGaAs/GaAs, GaAsP/GaP, InGaN/GaN, InGaAs/GaAs, AlGaN/GaN. The said nanowires can have length between 1 µm and 20 µm, diameter from 2 nm to 800 nm, and wavelength of emitting light between 800 nm and 2000 nm. Dielectric nanowires can be made by diameter tapering of optical fibers, while metallic can be made by metal wires or by composite metal/glass systems that can be applied in plasmonic applications, with or without embedded quantum dots. In another embodiment there is a light coupling system wherein the channel optical waveguide is fabricated on silica material, or fused silica, or doped silica for refractive index modification such as Germanium doped silica, in a photonics platform like 3-Layer silica-on-silicon structure. In such an embodiment the channel optical waveguide can have a profile by any of type from: circular, rectangular, orthogonal shape depending on the fabrication process, while the width or diameter of the channel optical waveguide can range between 1µm to 10µm, and the refractive index difference compared to pure silica can range between 10⁻⁴ and 10⁻¹. In another embodiment there is a light coupling system wherein the distance between the nanowire and the optical dielectric microelement, or the distance between the microsphere and the waveguide is between 0µm and 30µm. Another aspect of the invention is a method for coupling light from a nanowire to an optical waveguide comprising the steps of i) providing a light coupling system comprised by the [Nanowire - Microsphere - Waveguide] elements according to the aforementioned description ii) ejecting light from a nanowire or a nanowire with one or more quantum dots, iii) illuminating the optical dielectric microelement with the said light in order to produce a photonic nanojet and iv) ejecting the said emitted photonic nanojet into a waveguide or specifically to a channel optical waveguide in order to excite the corresponding waveguide supported (guided) eigenmodes and facilitate light coupling. Another aspect of the invention related to the aforementioned method for coupling of a nanowire to an optical waveguide, wherein for a light coupling system with specified nanowire and specified waveguide, it is selected the highest coupling value from the nanowire to the optical waveguide, by ranging the following parameters: 1) Size of the optical microelement, 2) Refractive index of the optical microelement, 3) Distance between the nanowire and the optical microelement, 4) Distance between the optical microelement and the channel optical waveguide, by selecting appropriately the said parameters in order to achieve the maximum light coupling. In another embodiment with a light coupling system and a method for coupling light, the optical dielectric microelement is a microsphere with refractive index preferably in the range of 1.5 to 2.5, and with diameter between 2 µm and 45 µm and more preferably between 3 µm and 10 µm. Another aspect of the invention is the use of the light coupling system and methods of coupling light in the development and realization of quantum integrated optical circuits for applications in the development of scalable quantum computers, quantum sensors and quantum communications systems.

### CASE APPLICATION I

Initially, it is considered the generic and simplified case of a uniform homogeneous cylindrical optical waveguide with a circular like core profile embedded in a homogeneous medium of lower refractive index such as silica. As single photon emitter is considered that the NWQD is a III-V Indium Arsenide Phosphide (InAsP) QD, embodied in an Indium Phosphide (InP) NW, which is a typical case of NWQD. The NW is 4 µm long with a diameter of 200 nm while the taper diameter at the end of the NW is 109nm corresponding to a taper angle of 2°. The location of the QD is 200 nm from the NW's base. The considered NWQD emits light at 880 nm and therefore all the simulation are considered at this operating wavelength. A typical NWQD is schematically shown in Figure 1a,b together with the simulated electric field under excitation. The considered NWQD is an indicative case of semiconductor based nanowire with a semiconductor based embedded QD, while in the generic case other nanowires based on different semiconductors systems, or dielectric nanowires or metallic plasmonic nanowires could be considered for light coupling. The semiconductor NWQD like the InAsP/InP or InAs/GaAs is in the current state of the art of single photon sources. Also the geometric characteristics of the InAsP/InP NWQD considered are also indicative while also larger NWQD with length >10 µm and with multiple QDs are available. By considering these NWQD the results were similar to the presented in this invention and therefore there was no need to include them. The cylindrical waveguide **1.4** as shown schematically in Figure 1e has a diameter of 3µm and has a refractive index of 1.457 which corresponds to a refractive index difference of 5·10⁻³ compared to silica with refractive index of 1.452 at 880 nm. A refractive index difference of this value provides i) single TE/TM mode operation and ii) moderate confinement thus minimizing the effects due to fabrication of modeling imperfections.

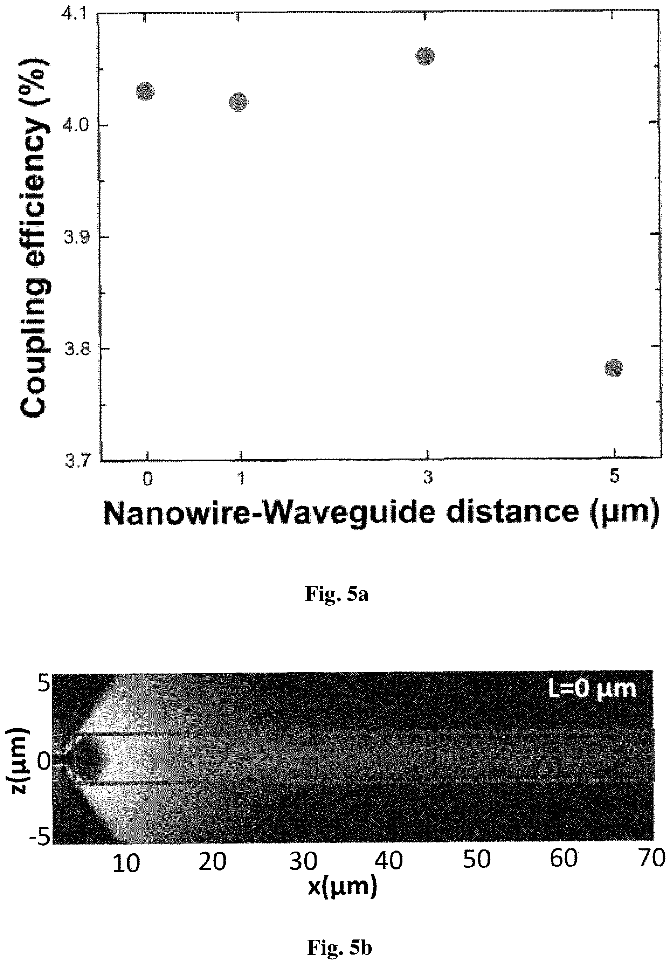

First, is demonstrated as a reference, the operation of NWQD directly connected to a waveguide as seen in Figure **1c****,** without the use of microsphere thus representing the current state of the art. The calculation of the light coupling is performed by FDTD simulations. The model takes into account the overlap between a QD electric dipole moment, embedded in the nanowire, and the waveguide TE fundamental mode to accurately calculate the light coupling. Figure **5a** presents the evaluated light coupling from NWQD to a cylindrical waveguide by simple proximity without the use of a microsphere, for a range of distance L ranging from 0 to 5 µm. Figure **5b** shows the light propagation, as the distribution of the TE electric field in the XZ plane, propagating in the X-axis along the waveguide axis after excitation by the NWQD, for L=0µm. It is obvious that most of the NWQD emitted light dissipates out of the waveguide and only a small portion of that couples to the waveguide TE fundamental mode, dramatically reducing the light coupling value to ~4%. This finding confirms inefficient light coupling between the NWQD and the optical waveguide. The constrained light in the scheme is nearly visible due to inefficient coupling.

Following the aforementioned results representing the current state of the art is presented here the coupling performance by employing the method of microsphere inclusion of this invention. Figure **3** illustrates the proposed generic photonic system with the addition of the microsphere **3.3.** In this generic parametric configuration, we consider that the microsphere is at distance D from the front waveguide facet while L defines the distance between the NWQD taper tip and the front microsphere surface. In the following study we assume for simplicity D=0 µm. To formulate the problem we consider microspheres with refractive index spanning from n=1.6 to n=2.5, simulating different microsphere materials, such as Polystyrene (n=1.6), Alumina (Al₂O₃, n_{Al}=1.76), Barium Titanate (n_{Ba}=1.9, 2.2) or Titania (n_{Ti}=2.5) which correspond to commercially available microspheres.

The invented method is generic and can be applied in various photonic platforms with materials of higher or lower refractive indices than the silica considered in the demonstrated cases. Therefore the refractive indices of the optimal dielectric microspheres can be adjusted to lower or higher refractive indices depending on the specific case.

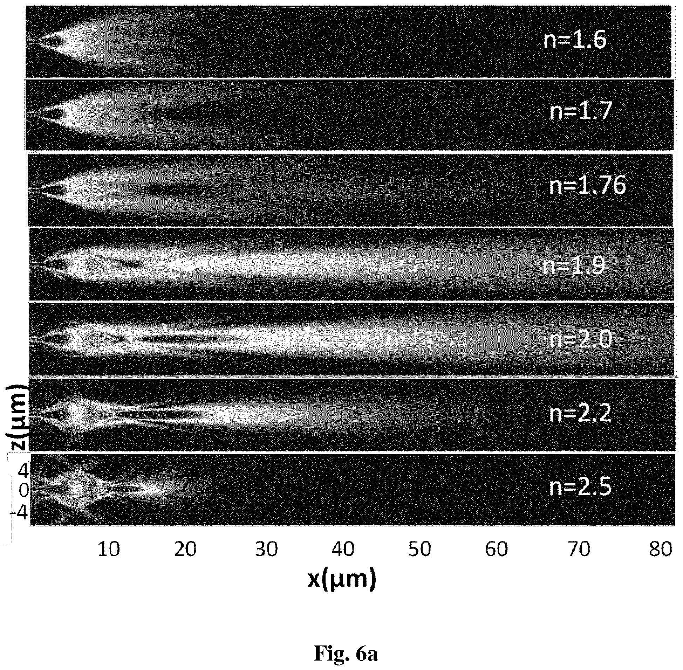

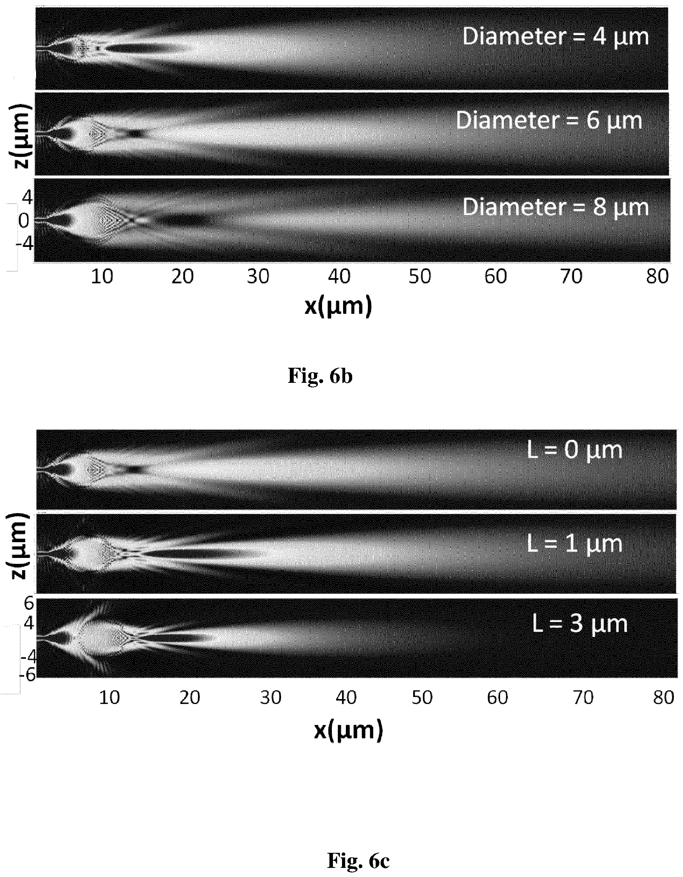

First, is highlighted the role of the microsphere's characteristics in the photonic nanojet's formation, such as the refractive index, radius and distance from NWQD. Initially is studied by FDTD simulations a standalone microsphere illuminated by the NWQD neglecting the effect of waveguide and present the characteristics of the formed photonic nanojet and its propagation over 70 µm distance. Figures **6a****,** present the nanojet beam characteristics for different microsphere refractive indices while the microspheres diameter is kept constant to 6 µm, and the NWQD-microsphere distance is constant L=0 µm. Figure **6b** presents the formation of photonic nanojet for three distinct microsphere cases with diameters 4µm, 6µm and 8µm, with n=1.9 and L=0 µm. Figure **6c** show the nanojet formation for NWQD-microsphere distance L= 0, 1, and 3 µm with microsphere refractive index 1.9 and diameter set to 6 µm.

It is observed that as the refractive index ratio of the microsphere to the background (n=1.452) increases, the formation of the photonic nanojet occurs closer to the shadow side surface or even inside the microsphere for high enough refractive index (e.g. n=2.5), its elongation along the propagation axis reduces, the peak intensity increases and the FWHM becomes narrower. In general, it is noticed that the addition of the microsphere modifies the spatial characteristics of the emitted light form NWQD light, so it can be tailored to a high degree, by adjusting the refractive index, the diameter and the distance in order to achieve more efficient excitation of the waveguide. The photonic nanojet design and customization provides the way for optimal conditions towards efficient coupling to the channel optical waveguide.

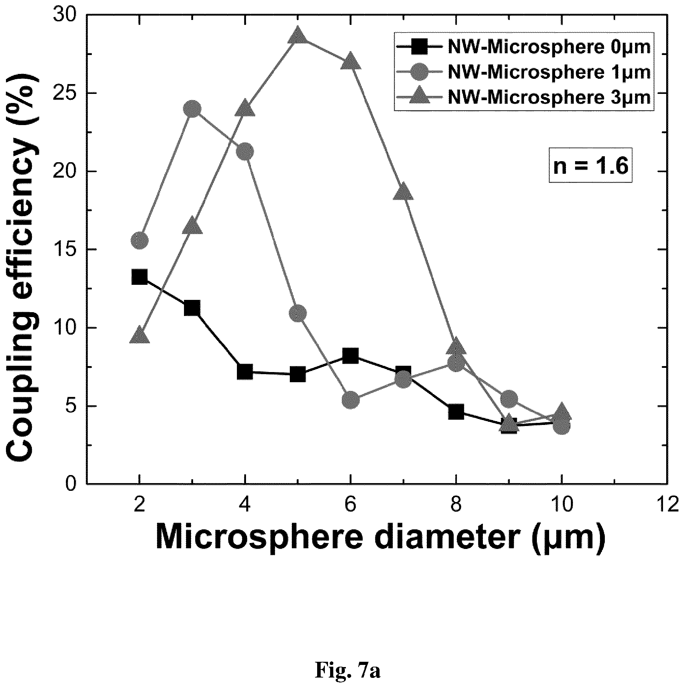

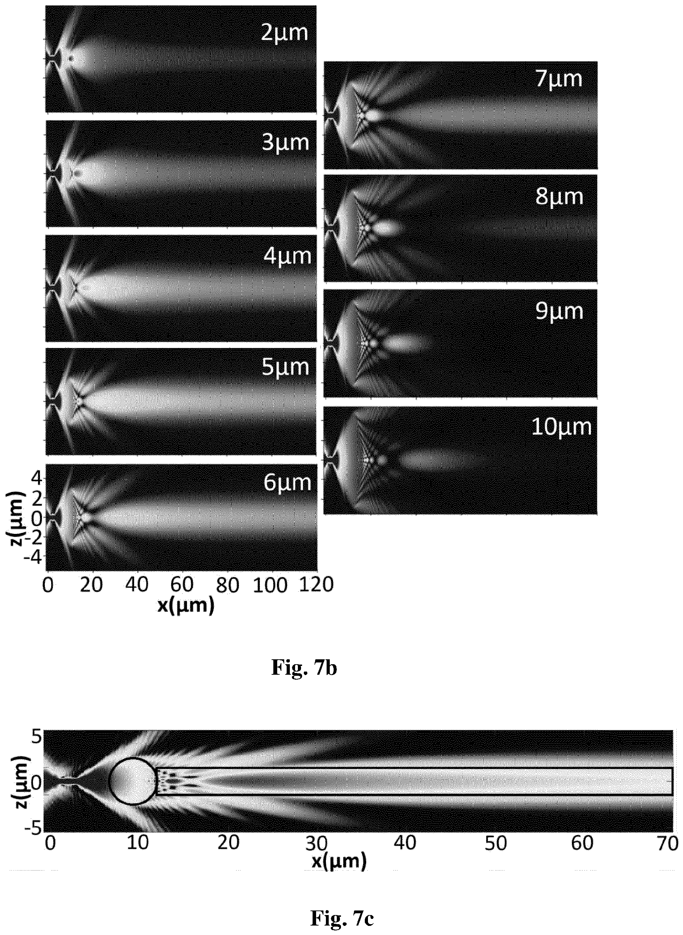

In order to evaluate the effect of the microsphere between the nanowire and the waveguide, extensive FDTD calculations were conducted in the full photonic structure as depicted in the Figure **3****,** by cross-relating the parameters: a) microsphere's diameter, b) microsphere's refractive index, and c) relative distance L between the NWQD and the microsphere. The results are organized in separate graphs (in Figures **7-13**) presenting the coupling efficiency for each separate case with a specific refractive index n, between 1.6 and 2.5, as a function of diameters and for three different cases of distance L.

Figure **7a** shows the coupling curves for a microsphere with n=1.6. Figure **7b** shows representative propagation simulations, over 120 µm length, for specific diameters and distance E=3µm. Figure **7c** shows in detail the coupling mechanism for the optimum case with maximum coupling with diameter 5µm and L=3µm over 70 µm propagation length. It must be noted that in this Figure **7c** (and in all the corresponding graphs (in Figures **7c-13c**) the scaling and graphical color representation has been changed and enhanced to demonstrate the details of photonic nanojet generation and propagation and make visible microspheres' perimeter in relation to the nanojet formation.

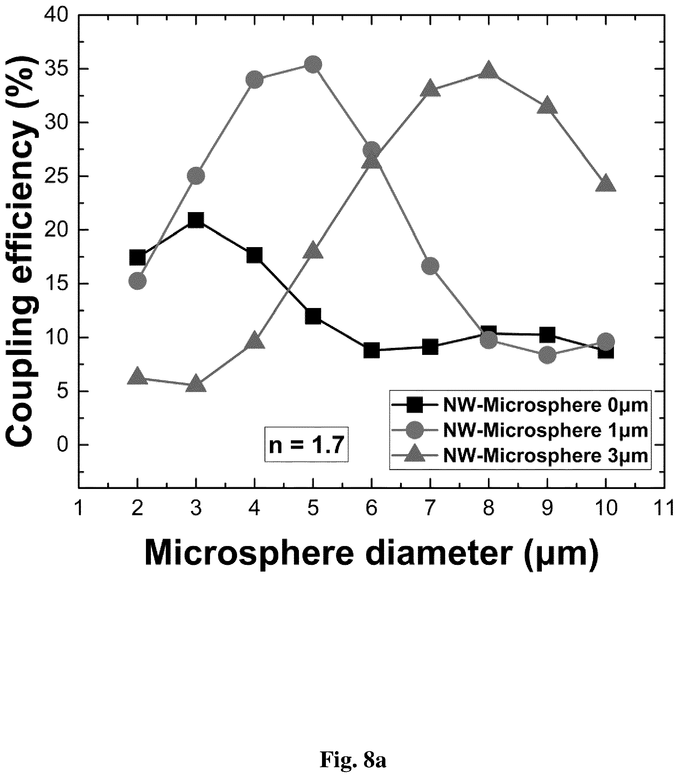

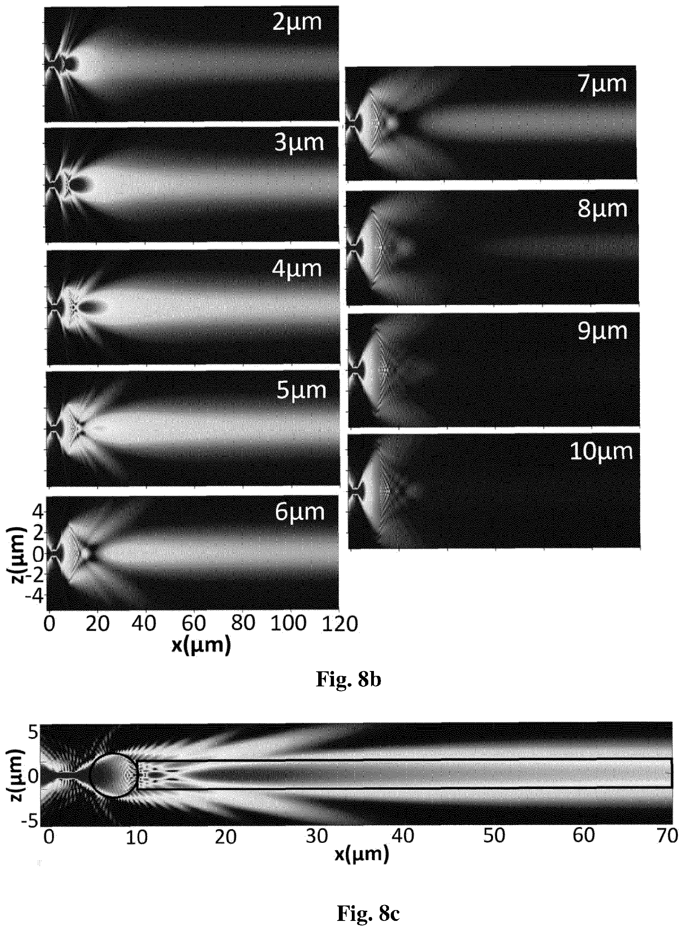

Figure **8a** shows the coupling curves for a microsphere with n=1.7. Figure **8b** shows representative propagation simulations, over 120 µm length, for specific diameters and distance L=1µm. Figure **8c** shows in detail the coupling mechanism for the optimum case with maximum coupling with diameter 5µm and L=1µm over 70 µm propagation length.

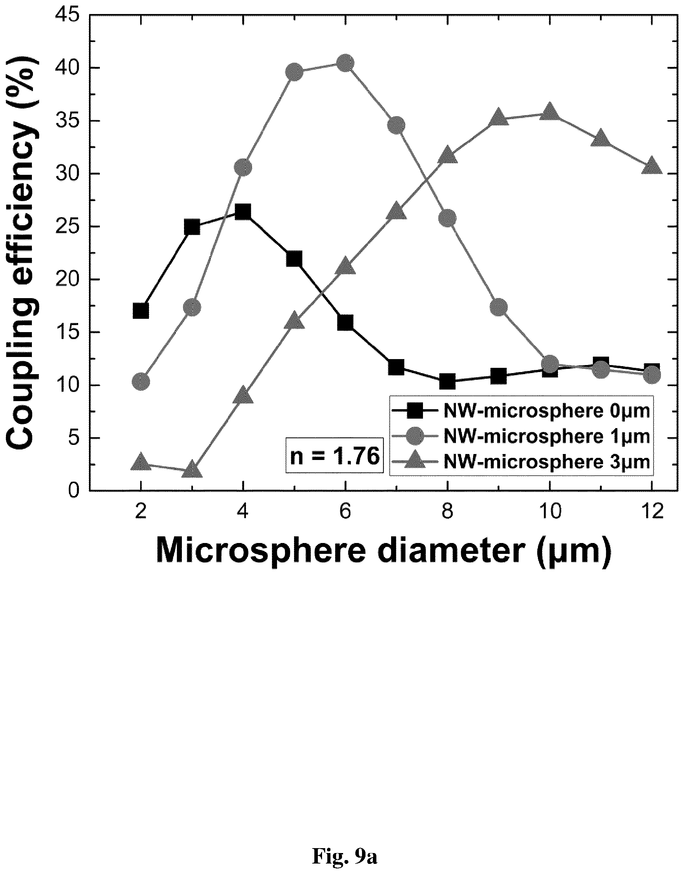

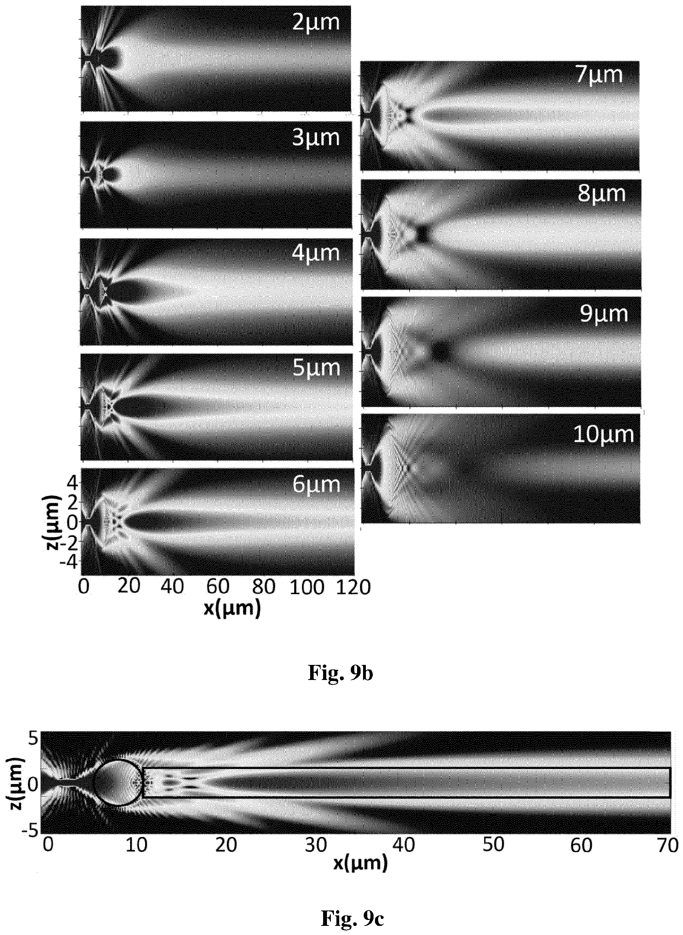

Figure **9a** shows the coupling curves for a microsphere with n=1.76. Figure **9b** shows representative propagation simulations, over 120 µm length, for specific diameters and distance L=1µm. Figure **9c** shows in detail the coupling mechanism for the optimum case with maximum coupling with diameter 6µm and L=1µm over 70 µm propagation length.

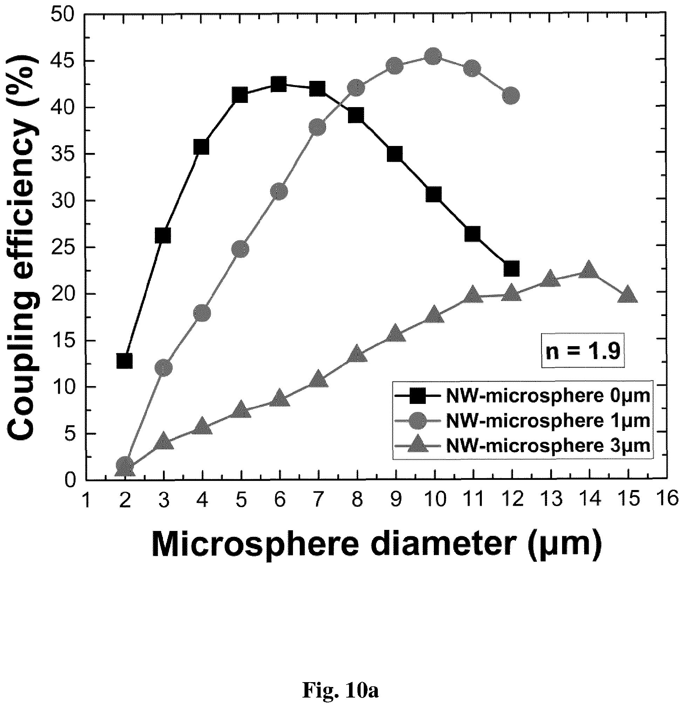

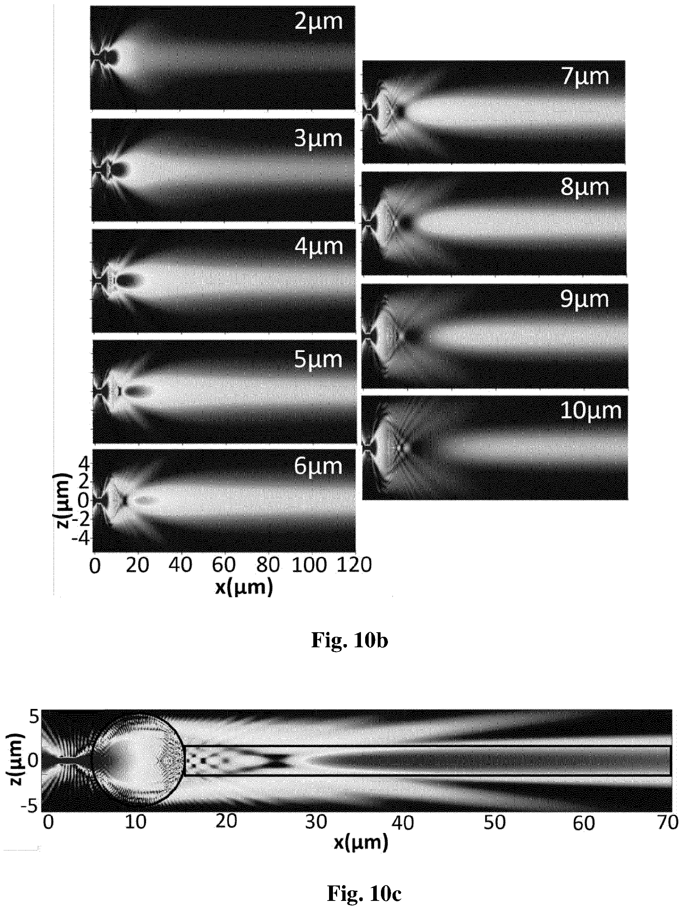

Figure **10a** shows the coupling curves for a microsphere with n=1.9. Figure **10b** shows representative propagation simulations, over 120 µm length, for specific diameters and distance L=1µm. Figure **10c** shows in detail the coupling mechanism for the optimum case with maximum coupling with diameter 10 µm and L=1µm over 70 µm propagation length.

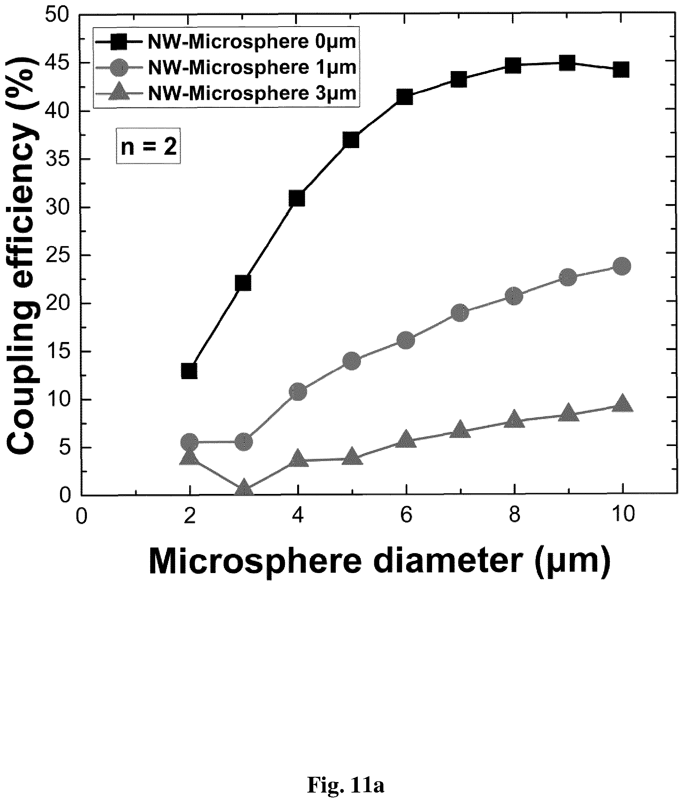

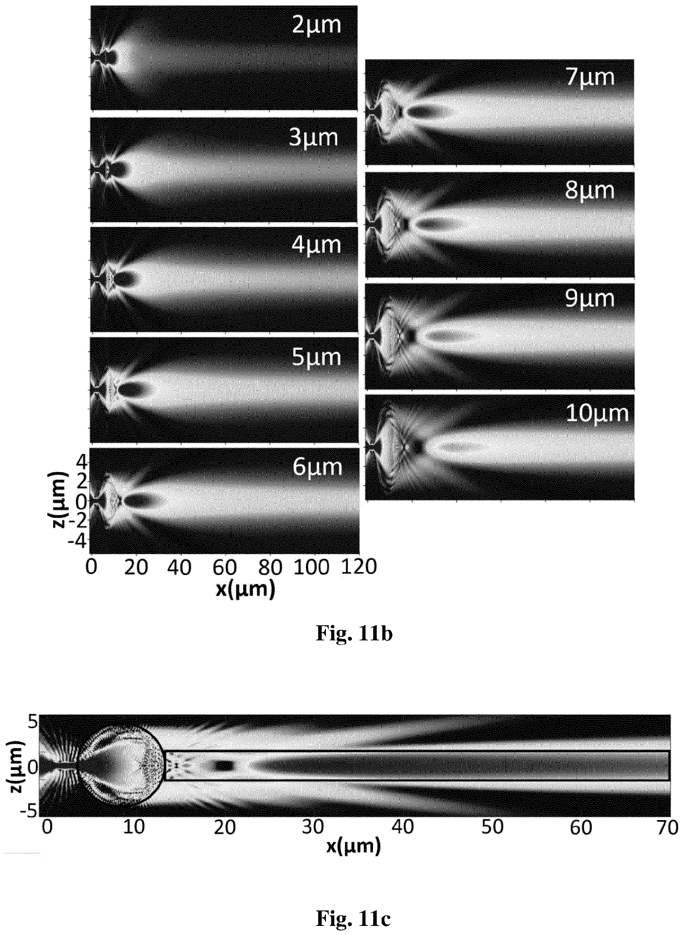

Figure **11a** shows the coupling curves for a microsphere with n=2.0. Figure **11b** shows representative propagation simulations, over 120 µm length, for specific diameters and distance L=0µm. Figure **11c** shows in detail the coupling mechanism for the optimum case with maximum coupling with diameter 9 µm and L=0µm over 70 µm propagation length.

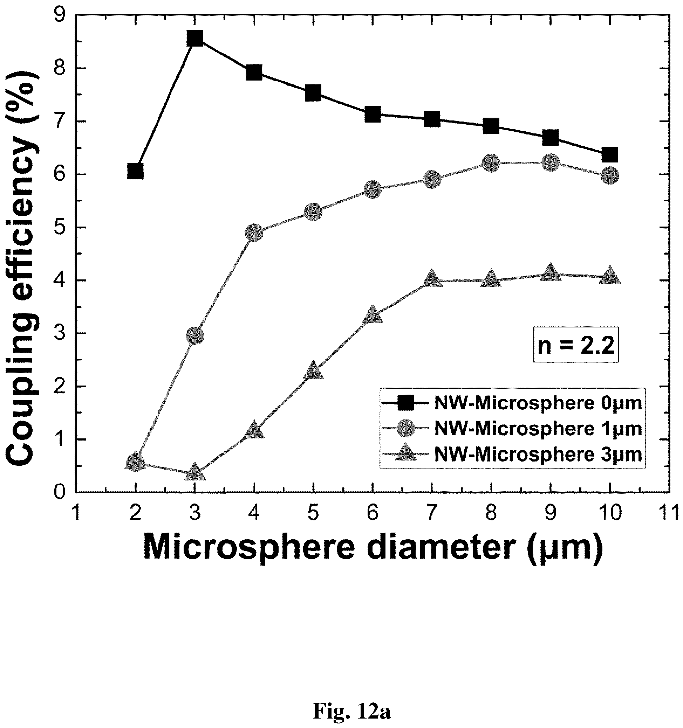

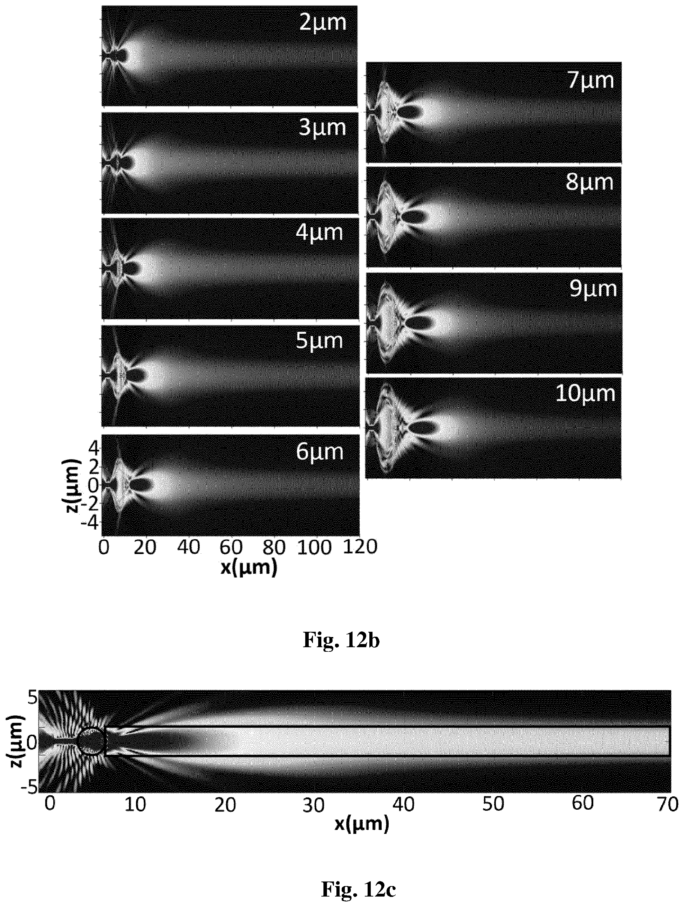

Figure **12a** shows the coupling curves for a microsphere with n=2.2. Figure **12b** shows representative propagation simulations, over 120 µm length, for specific diameters and distance L=0µm. Figure **12c** shows in detail the coupling mechanism for the optimum case with maximum coupling with diameter 3 µm and L=0µm over 70 µm propagation length.

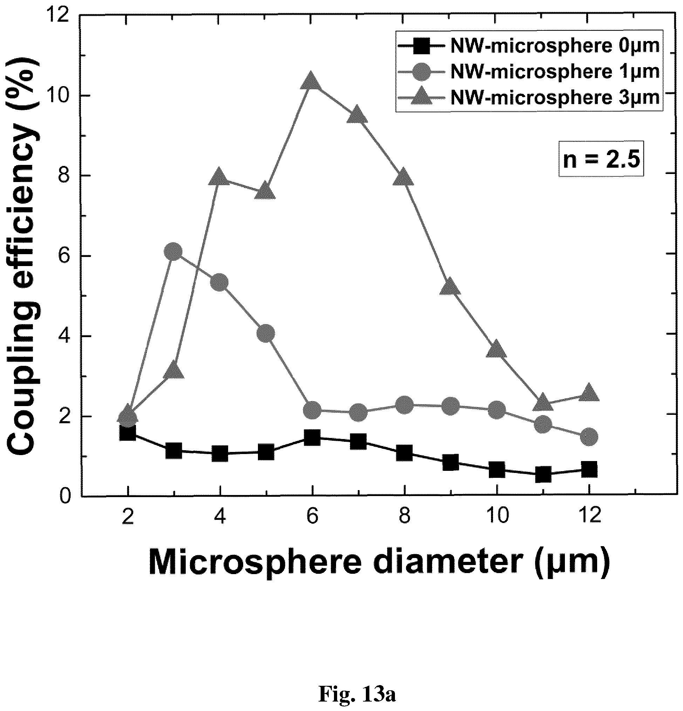

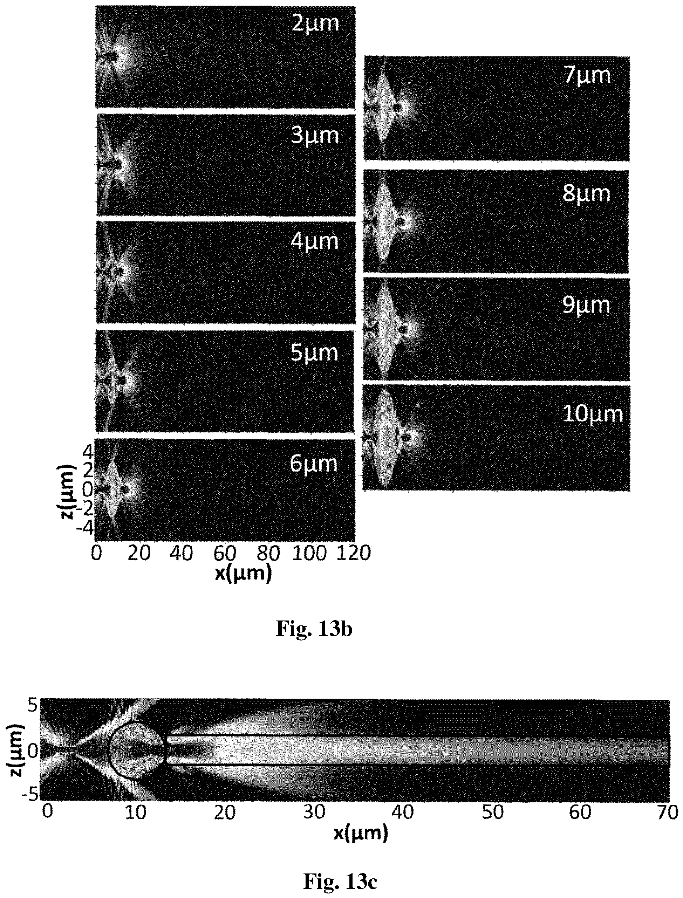

Figure **13a** shows the coupling curves for a microsphere with n=2.5. Figure **13b** shows representative propagation simulations, over 120 µm length, for specific diameters and distance L=3µm. Figure **13c** shows in detail the coupling mechanism for the optimum case with maximum coupling with diameter 6 µm and E=3µm over 70 µm propagation length.

It is obvious that the incorporation of the microsphere drastically enhances the light coupling between nanowire and waveguide by selecting the appropriate microsphere characteristics and the relative distance L. More specifically, TE directional coupling values as high as 40%-45% can be achieved with precise control of the relative distance L in the case of the n=1.76, n=1.9 and n=2 microspheres. However the coupling efficiency is very sensitive to the relative distance between the nanowire and the microsphere. Small deviations from the optimum design is possible to gradually downgrade the coupling efficiency, however state of the art micropositioning performance (with angular accuracy better than 1° angle and positioning resolution better than 30 nm) can provide adequate accuracy at the nanometer level, avoiding these issues, and ensuring optimal arrangement according to design. Concluding, the coupling efficiency values extracted with the aid of a microsphere are more than an order of magnitude greater than those obtained without the microsphere by just end firing (butt-coupling) the nanowire with the waveguide.

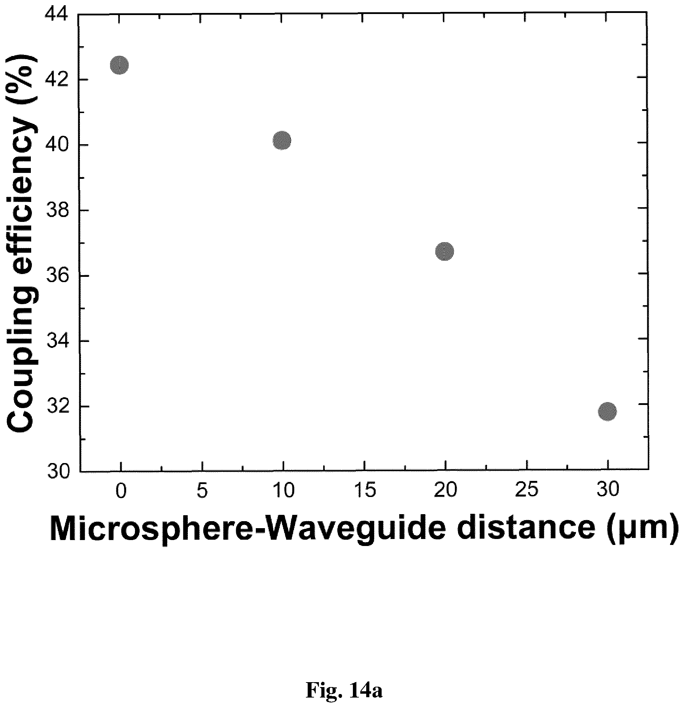

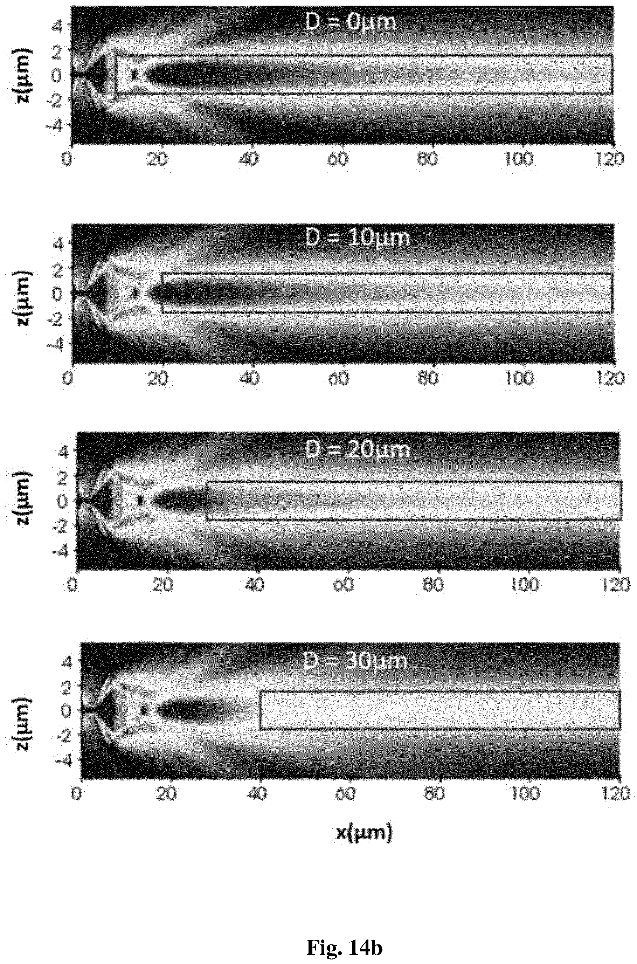

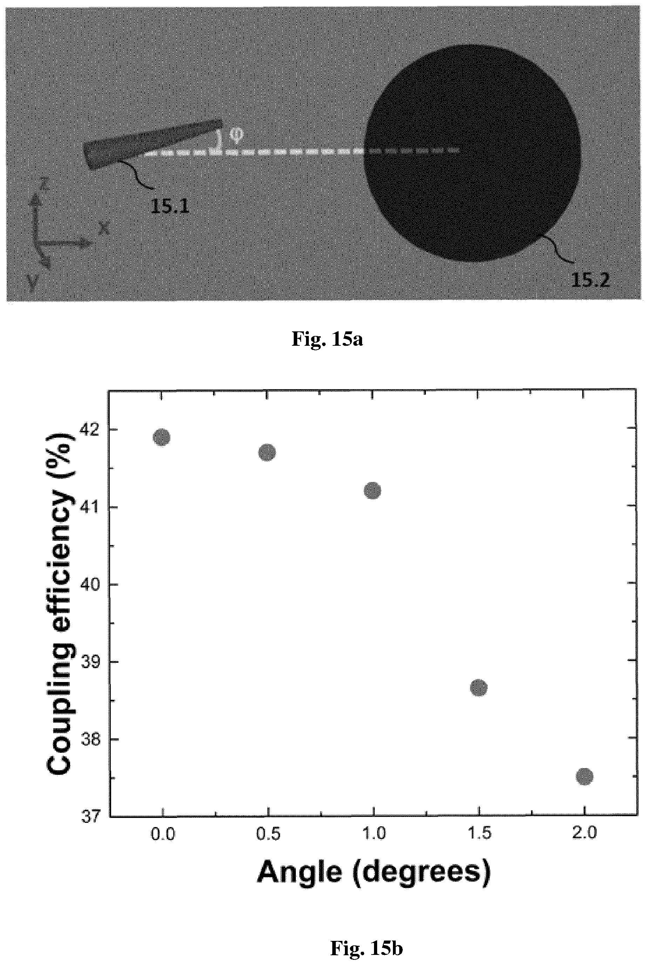

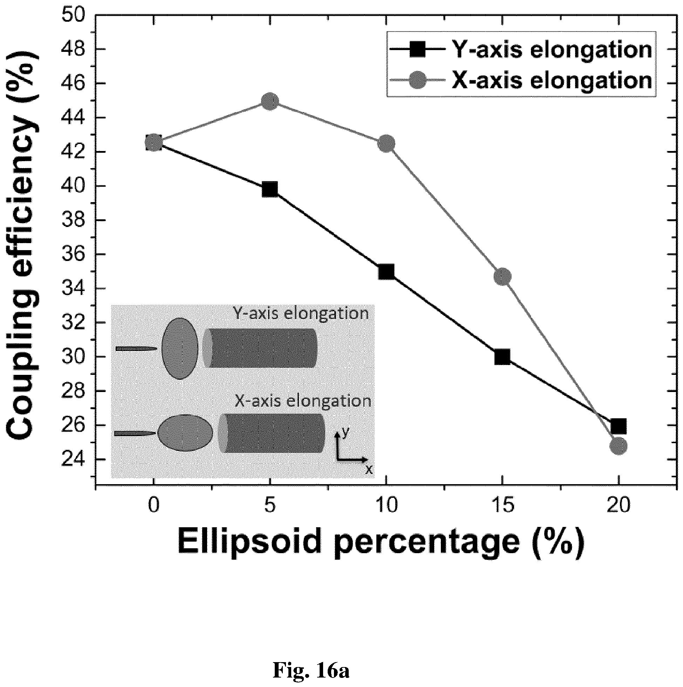

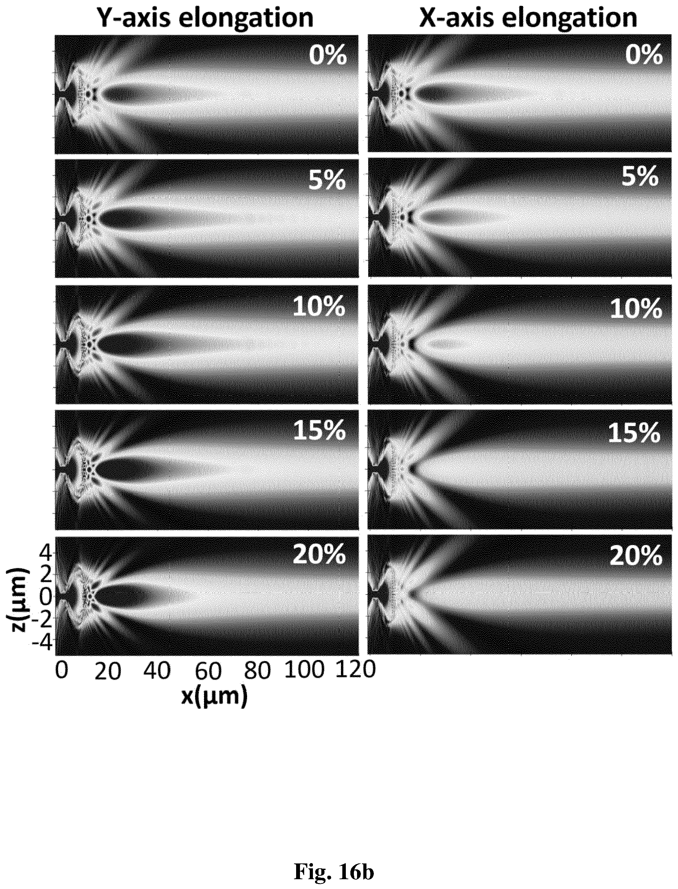

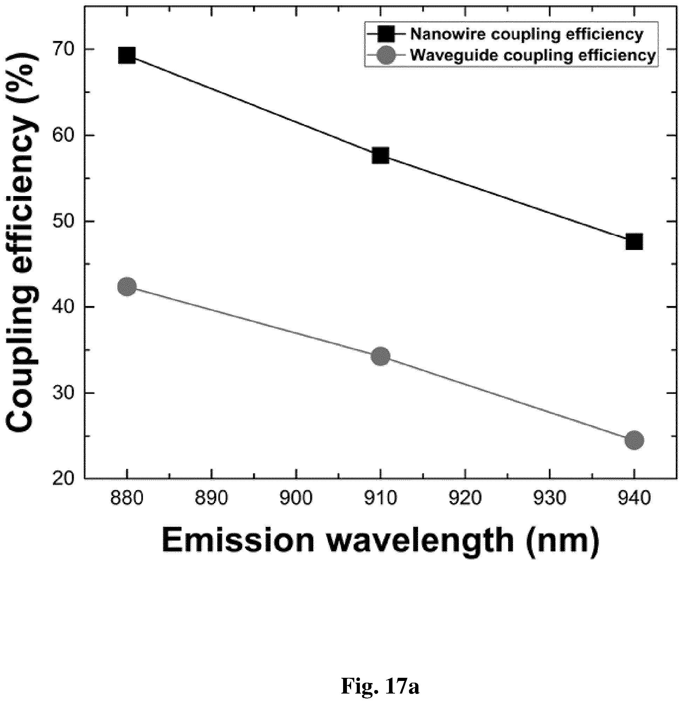

Additionally, in order to further study the efficiency of the proposed lightcoupling mechanism, complementary FDTD simulations are presented in order to demonstrate the tolerances of the proposed method to various parameters:
**A. Effect of distance microsphere** - **waveguide.** The case where the microsphere and the waveguide are no longer in contact, but there is a gap D between them, as shown earlier in Figure **3****,** is presented. In this case the distance between the nanowire and the microsphere is set to 0 µm, while the distance D between the microsphere and the waveguide is increased from 0 µm to 10 µm, 20 µm and 30 µm. In this example the microsphere refractive index is n=1.9 and its diameter is set to 6 µm. Figure **14a** shows the effect of distance D between the microsphere and waveguide in the coupling performance demonstrating that there is an adequate tolerance in the distance, as does not affect drastically the coupling performance. Figure **14b** shows schematically representative figures of propagating electric fields for various cases of parameter distance D for a propagation distance of 120 µm.
**B. Effect of misalignment.** The accurate placement of the nanowire (or NWQD) and its axis alignment with the rest of the photonic blocks (microsphere and waveguide) is typically performed by accurate transfer techniques, e.g. by employing nanomanipulators with typical accuracy better than 1° angle and positioning resolution better than 30 nm. However, the effect of any tilt misalignments due to an induced tilt of angle ϕ related to the central axis of a microsphere **15.2,** as illustrated in Figure **15a** is evaluated here. An arrangement with L=0 µm and with a microsphere with a 8 µm diameter and n=1.9 microsphere was considered. Figure **15b** shows that despite the rotating angle misalignment between the nanowire and the microsphere, the coupling remains high enough, reduced only by 4% for a maximum rotating angle of 2°, exhibiting the robustness of the system under experimental misalignment issues. State of the art micromanipulation techniques can provide very accurate control of positioning eliminating tilts to angles below 1 degree, and therefore the proposed technique is relatively robust also to such tilts.
**C. Effect of Sphericity.** Additionally, the overall efficiency of the proposed system is examined in terms of the microsphere's shape deviation from a perfect spherical shape. Chemically produced microspheres, typically, have a high sphericity ratio. However, there is a small percentage of microparticles that are not perfect spheres, rather have a more ellipsoidal shape. We quantify this spherical deformation by considering the generic case of an ellipsoid with B and A the major and the minor axial diameters of it. The "ellipsoid percentage" (as seen in Figure **16**) is defined as [(B-A)/A]x100%, where for the spherical case has the value zero. FDTD simulations performed for the case of a microsphere (n=1.9, 6µm diameter) between the NQD and the waveguide which is elongated in either the Y-axis (or equivalently the Z-direction due to symmetry) or the X-axis and the propagation of light is monitored along the X-axis. The coupling efficiency values are presented in Figure **16a** for both Y-axis and X-axis elongation with their values being identical due to the symmetry of the structure. It is shown that the effect of the ellipsoidal microsphere medium results in linear decrease of coupling efficiency as the sphere deformation and ellipsoid percentage increases. Figure **16b** shows the propagated electric field along the X propagation axis for a number of ellipsoidal spheres, for a distance of 120 µm, demonstrating the robustness of the method to any small sphericity deviations.
**D. Effect of NWQD operating wavelength.** In the aforementioned description, it was considered a single NWQD emitter centered at 880 nm, however, in practical PICs one or more emission sources can be incorporated emitting in more than one wavelength, and therefore the robustness of the proposed configuration needs to be examined for different emission wavelengths other than the optimal. The requirement is that a specific microsphere can couple light from different NWQD emitted at different adjacent wavelengths, easing thus the hybrid circuit fabrication by using, if possible, only one type and size of microsphere at different/multiple input ports. Furthermore, new developments in NWQD have enabled the integration of multiple QDs in a single nanowire and therefore a single optimized microsphere should ideally couple light efficiently at the multiple wavelengths corresponding to multiple QDs in a single nanowire. The typical nanowire (described above) is considered but examined now with QDs emitting at 880 nm, 910 nm, and 940 nm wavelengths. The dipole emission in the nanowire waveguide exhibits a coupling efficiency (to the nanowire) of -70% for 880 nm wavelength, dropping to ~60 % for 910 nm and to -50% for 940 nm wavelengths. A microsphere with refractive index is n=1.9 and diameter of 6 µm, is considered again as above. Figure **17** show the coupling performance of the NWQD to channel optical waveguide at different light wavelengths, demonstrating that the coupling decrease is attributed to the inefficient coupling of QD to the optical nanowire waveguiding structure, while the microsphere operates equally efficiently to different wavelengths suggesting the robustness to operating wavelengths.

### CASE APPLICATION II

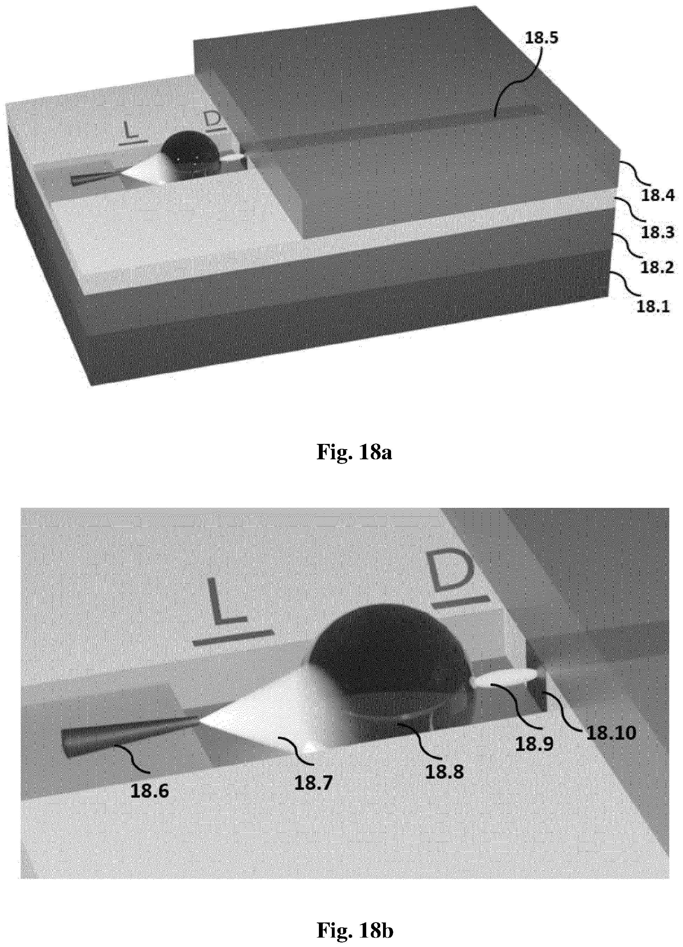

The second demonstrated case refers to a 3-layer silica-on-silicon planar integrated photonics platform with a middle photosensitive core layer typically from Germanium doped silica glass. Typically, this photonic platform pictured in Figure **18a** consists of a silicon substrate **18.1** followed by a thermally deposited silica layer **18.2,** indicatively of 15 µm thickness for optical isolation. The middle layer **18.3** is a photosensitive germanium doped silica layer of typical thickness 3 µm and on this layer could be defined channel optical waveguides, such as **18.5,** by refractive index modification after illumination by ultraviolet laser. An over cladding **18.4** of typically 15 µm protects and optically isolates the circuit. A typical configuration employing the invented coupling apparatus with the use of a microsphere is shown in Figure **18a****.** A number of quantum optical circuits have been developed in this platform but with no embedded single photon sources, while this invention demonstrates the feasibility of NWQD integration in this realistic and favorable platform. Figure **18b** is a schematic diagram showing a magnification of the three dimensional arrangement of the nanowire **18.6,** with its generated light beam **18.7** ejected to the microsphere **18.8,** which produces the photonic nanojet **18.9,** directed to the buried channel optical waveguide **18.10.**

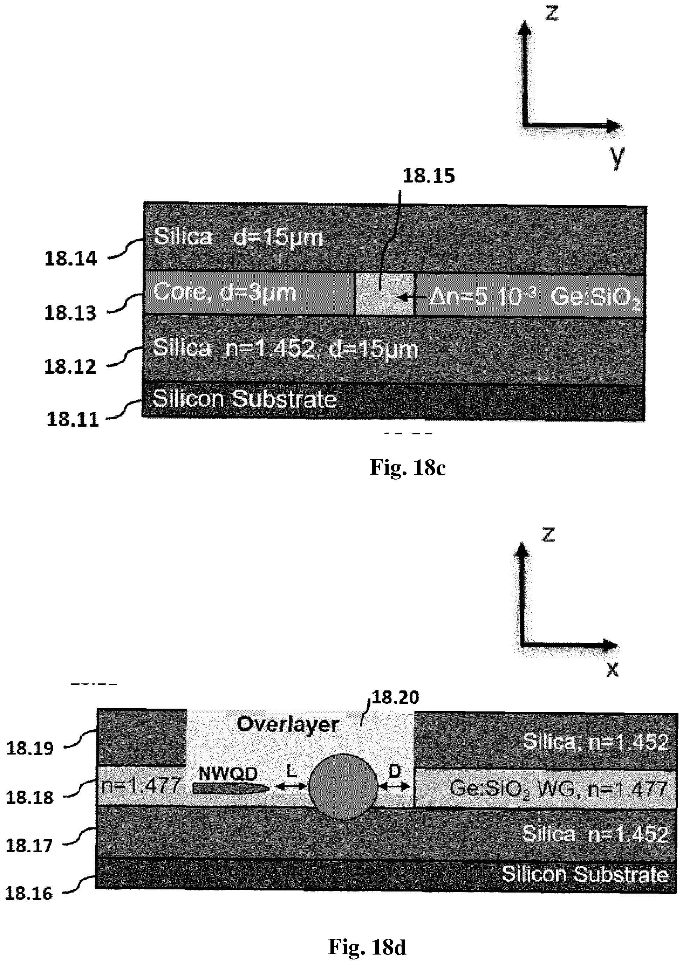

A typical refractive index value for silica is n=1.452, while the germanium doping of silica can offer a positive refractive index change up to 2×10⁻², with an additional 5×10⁻³ refractive index raise when laser irradiated. The overall refractive index change in the core channel optical waveguide may achieve a value of Δn=2.5×10⁻² in the vertical direction (Z) and Δn=5×10⁻³ horizontally (Y). So finally, in the considered case, the planar core layer is set to n=1.472 and the post-processed buried channel optical waveguide is n=1.477. The UV written germanosilicate waveguide is designed as a rectangle with a 3x3 µm² cross-sectional area to ensure the single mode operation. Figure **18c** shows schematically a 2D diagram with the YZ view, with the geometrical and optical characteristics of a laser written buried channel optical waveguide **18.15,** in a structure on silicon substrate **18.11,** with silica undercladding **18.12** of 15 µm, a core layer **18.13** with thickness 3 µm, and an overcladding **18.14** with thickness 15 µm. Figure **18d** shows in a simplified view the optical arrangement in 2D in relation to the 3D view in Figure 18a. We assume in Figure **18d** a vertical cut at the plane XZ in the middle of the channel optical waveguide thus making visible to the reader the silicon substrate **18.16,** the undercladding layer **18.17,** the channel optical waveguide **18.18** and the overcladding **18.19.** For accessing the buried core it is assumed that a suitable physical window or trench has been opened, by fabrication means of the current state of the art like laser ablation or RIE, on the overcladding in order to host the microsphere and the nanowire aligned with the axis of the channel optical waveguide as seen in this Figure **18d****.** This physical opening, which is a trench, can be filled with a suitable material like polymer, forming an overlayer **18.20,** with refractive index close or preferably equal to that of silica to achieve a symmetric structure.

The coupling performance of a typical NWQD to the channel optical waveguide is examined for the case of two representative cases of microspheres, with refractive indices of n=1.76 and n=1.9 to match the commercially available high refractive index Alumina and Barium Titanate microspheres respectively. To facilitate the simulation process, it is assumed that initially all components are surrounded by silica (n=1.452) or a polymer of a similar refractive index. Simulations (not presented here) have shown that the coupling without the use of a microsphere is below to 7%, which again is very low for practical implementations.

To evaluate the role of the microsphere in the NWQD-waveguide light coupling in this 3-Layer platform, extensive FDTD calculations were conducted in the full photonic structure as depicted in the Figure 18c,d by cross-relating the parameters: a) microsphere's diameter, b) refractive index and c) relative distance L between the NQD and the microsphere. The results are organized in separate graphs presenting the coupling efficiency for each separate case with a specific refractive index (n=1.76, 1.9), as a function of diameters and for three different cases of distance L.

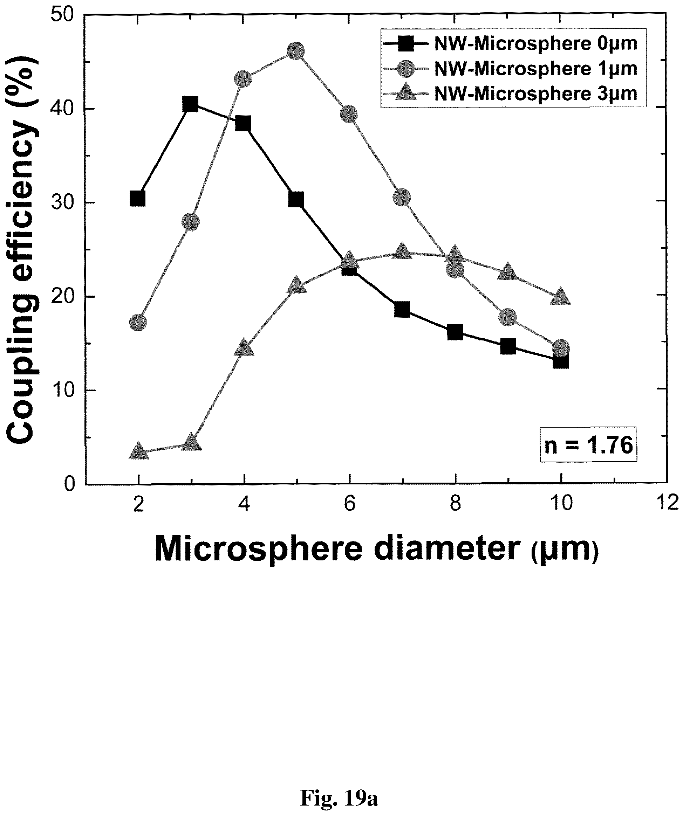

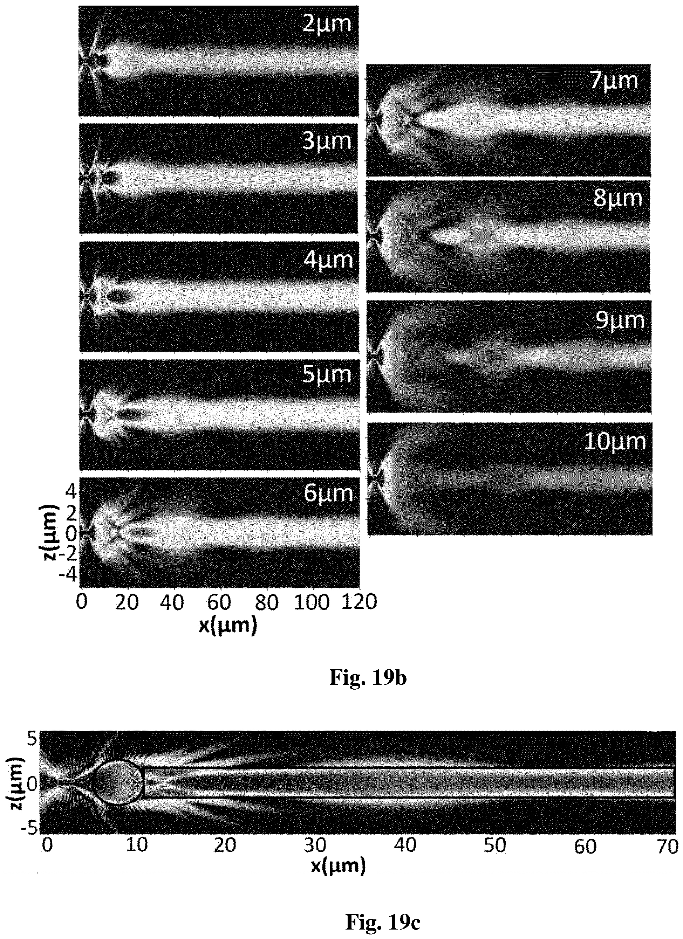

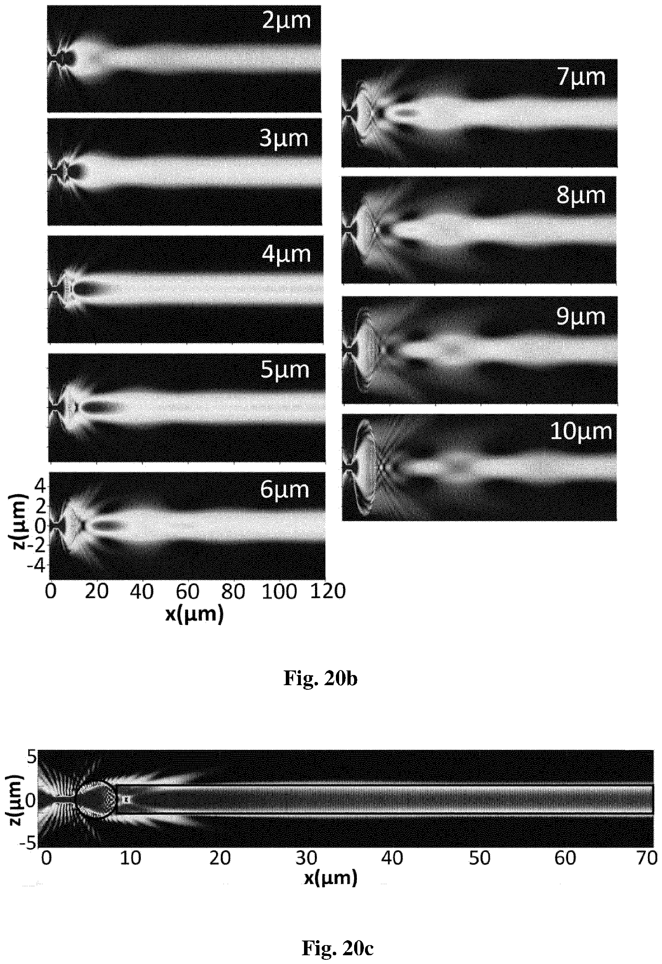

Figure **19a** shows the coupling curves for a microsphere with n=1.76 in a 3-Layer silica on silicon structure for various microsphere diameters spanning from 2 µm to 10 µm at NWQD-microsphere distance L=0 µm, 1 µm and 3µm. Figure **19b** shows representative propagation simulations, over 120 µm length, for specific diameters and distance L=1µm. Figure **19c** shows in detail the coupling mechanism for the optimum case with maximum coupling with diameter 5 µm and E=1µm over 70 µm propagation length. It must be noted that in this Figure **19c** (and also in graph in Figure **20c**) the scaling and graphical color representation have been changed and enhanced to demonstrate the details of photonic nanojet generation and propagation and make visible the trace of the microspheres' perimeter in relation to the photonic nanojet formation.

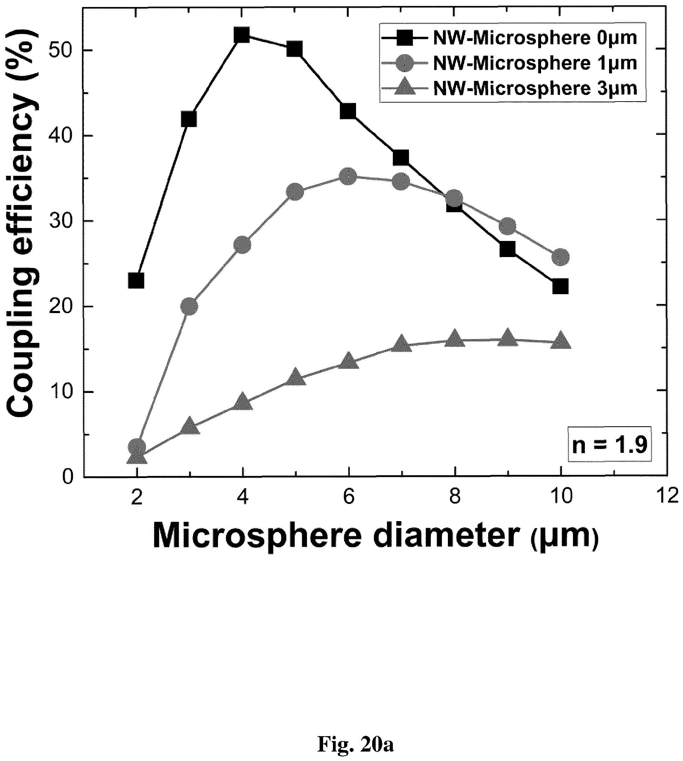

Figure **20a** shows the coupling curves for a microsphere with n=1.9 in a 3-Layer silica on silicon structure for various microsphere diameters spanning from 2 µm to 10 µm at NWQD-microsphere distance L = 0 µm, 1 µm and 3µm. Figure **20b** shows representative propagation simulations, over 120 µm length, for specific diameters and distance L=0µm. Figure **20c** shows in detail the coupling mechanism for the optimum case with maximum coupling with diameter 4 µm and L=0µm, over 70 µm propagation length.

Results presented above show that by tuning the optical and geometrical properties of the microsphere and the waveguide, a coupling efficiency value as high as 52% could be achieved. For a setup employing a BaTiO₃ microsphere (n = 1.9), a 4 µm diameter microsphere at L=0 µm appears to be the optimum, while for the Alumina microsphere (n=1.76) the coupling peak is shifted to a slightly bigger sphere at 5 µm diameter and inbetween distance L=1 µm. Comparing the curves for both microsphere materials, it seems that as the NWQD-microsphere distance is increased, the peak coupling efficiency is achieved at microspheres with larger diameter. However, the best overall coupling efficiency takes into account the refractive index of the microsphere as well, resulting in higher values for BaTiO₃ at L=0 µm, but for Al₂O₃ at L=1 µm.

The tolerances of the invented configuration in the 3-Layer structure, to the parameters such as a) distance microsphere - waveguide, b) NWQD misalignment, c) Sphericity d) NWQD operating wavelength, follow the same trends to the tolerances presented in the CASE I of the simplified cylindrical waveguide which is the most generic case. The robustness of the proposed solution applies also in this Case II.

### BRIEF DESCRIPTION OF THE DRAWINGS

For a better understanding of the invention and to show how the same may be carried into effect, reference is now made by way of example to the accompanying drawings in which:
**Figure 1a** is a schematic diagram showing the structure of a nanowire with an embedded quantum dot, with the typical dimensions considered in the description section. **Figure 1b** is a graph schematically showing the electric field propagation along the nanowire axis after the QD excitation. **Figure 1c** is a schematic diagram showing the arrangement of a nanowire NWQD, at launching position, related to a cylindrical waveguide embedded in a homogeneous medium
**Figure 2** is a schematic diagram showing a photonic nanojet generated by a microsphere.
**Figure 3** is a schematic diagram showing the optical arrangement between a NWQD, a microsphere and an optical waveguide. The separation between the end tip of NWQD and the adjacent surface of the microsphere is L, while the separation between the surface of the microsphere adjacent to the end of the waveguide and the waveguide is D
**Figure 4** is a graph schematically showing the successful light coupling to a waveguide by the use of an optimally designed arrangement between the NWQD, the microsphere and the waveguide (microsphere with diameter 6µm, n=1.9 and distance from nanowire L=0µm). **Figure 4a** shows the creation of the photonic nanojet after illumination of the NWQD on the microsphere which is shown as a circle, and the coupling of light in the waveguide for a propagation distance of 70µm. **Figure 4b** shows the efficient coupling and lossless propagation of coupled light for a distance of 300µm in the waveguide. It should be noted that the color representation and intensity scaling is different between two graphs in order to reveal the details.
**Figure 5a** is a graph schematically showing the evaluated coupling from NWQD to a cylindrical waveguide by simple proximity without the use of a microsphere, for a range of distance L ranging from 0 to 5 µm. **Figure 5b** is a graph schematically showing the power propagation along the waveguide after excitation with the NWQD, for L=0µm. The constrained light in the waveguide is nearly visible due to inefficient coupling.
**Figures 6a** is a graph schematically showing the nanojet beam characteristics for different microsphere refractive indices while the microspheres diameter is kept constant to 6 µm, and the NWQD-microsphere distance is constant L=0 µm. **Figure 6b** presents the formation of photonic nanojet for three distinct microspheres cases with diameters 4µm, 6µm and 8µm, with n=1.9 and L=0 µm. **Figure 6c** show the nanojet formation for NQD-microsphere distance L= 0, 1, and 3 µm with microsphere refractive index 1.9 and diameter set to 6 µm.
**Figure 7a** is a graph schematically showing the light coupling curves for a microsphere with n=1.6. **Figure 7b** shows representative propagation simulations, over 120 µm length, for specific diameters and distance E=3µm. **Figure 7c** shows in detail the coupling mechanism for the optimum case with maximum coupling with diameter 5µm and L=3µm over 70 µm propagation length.
**Figure 8a** is a graph schematically showing the light coupling curves for a microsphere with n=1.7. **Figure 8b** shows representative propagation simulations, over 120 µm length, for specific diameters and distance L=1µm. **Figure 8c** shows in detail the coupling mechanism for the optimum case with maximum coupling with diameter 5µm and L=1µm over 70 µm propagation length.
**Figure 9a** is a graph schematically showing the light coupling curves for a microsphere with n=1.76. **Figure 9b** shows representative propagation simulations, over 120 µm length, for specific diameters and distance L=1µm. **Figure 9c** shows in detail the coupling mechanism for the optimum case with maximum coupling with diameter 6µm and L=1µm over 70 µm propagation length.
**Figure 10a** is a graph schematically showing the coupling curves for a microsphere with n=1.9. **Figure 10b** shows representative propagation simulations, over 120 µm length, for specific diameters and distance L=1µm. **Figure 10c** shows in detail the coupling mechanism for the optimum case with maximum coupling with diameter 10 µm and L=1µm over 70 µm propagation length.
**Figure 11a** is a graph schematically showing the coupling curves for a microsphere with n=2.0. **Figure 11b** shows representative propagation simulations, over 120 µm length, for specific diameters and distance L=0 µm. **Figure 11c** shows in detail the coupling mechanism for the optimum case with maximum coupling with diameter 9 µm and L=0 µm over 70 µm propagation length.
**Figure 12a** is a graph schematically showing the coupling curves for a microsphere with n=2.2. **Figure 12b** shows representative propagation simulations, over 120 µm length, for specific diameters and distance L=0 µm. **Figure 12c** shows in detail the coupling mechanism for the optimum case with maximum coupling with diameter 3 µm and L=0µm over 70 µm propagation length.
**Figure 13a** is a graph schematically showing the coupling curves for a microsphere with n=2.5. **Figure 13b** shows representative propagation simulations, over 120 µm length, for specific diameters and distance E=3µm. **Figure 13c** shows in detail the coupling mechanism for the optimum case with maximum coupling with diameter 6 µm and L=3 µm over 70 µm propagation length.
**Figure 14a** is a graph schematically showing the effect of distance D between the microsphere and waveguide in the coupling performance for an arrangement with a microsphere with a 6 µm diameter n=1.9. **Figure 14b** shows schematically representative figures of propagating electric fields for various cases of D for a distance of 120 µm.
**Figure 15a** is a schematic diagram showing a misaligned NWQD, due to an induced tilt of angle ϕ related to the central axis of a microsphere. **Figure 15b** is a graph schematically showing the effect of misalignment in the coupling performance for an arrangement with a microsphere with a 8 µm diameter, n=1.9 and distance L=0 µm.
**Figure 16a** is a graph schematically showing the effect of sphericity ratio in the coupling performance for an arrangement with a microsphere with a 6 µm diameter n=1.9 and distance L=0 µm. **Figure 16b** shows schematically representative figures of propagating electric fields for various cases of ellipsoidal deformation for a distance of 120 µm.
**Figure 17** is a graph schematically showing the effect of NWQD operating wavelength, by embedding different QDs tuned at different wavelengths, in the light coupling performance for an arrangement with a microsphere with a 6 µm diameter, n=1.9 and distance L=0 µm.
**Figure 18a** is a schematic diagram showing a 3-Layer optical planar waveguiding structure. **Figure 18b** is a schematic diagram showing a magnification of the three dimensional arrangement of the nanowire and microsphere to the buried channel optical waveguide. **Figure 18c** is a schematic 2D diagram showing the geometrical and optical characteristics of a laser written channel optical waveguide. **Figure 18d** is a schematic 2D diagram showing in simplified view the optical structure and arrangement.
**Figure 19a** is a graph schematically showing the coupling curves for a microsphere with n=1.76 in a 3-Layer silica on silicon structure for various microsphere diameters spanning from 2 µm to 10 µm at NWQD-microsphere distance L=0 µm, 1 µm and 3µm. **Figure 19b** is a graph showing representative propagation simulations, over 120 µm length, for specific diameters and distance L=1µm. **Figure 19c** shows in detail the coupling mechanism for the optimum case with maximum coupling with diameter 5 µm and L=1µm over 70 µm propagation length.
**Figure 20a** is a graph schematically showing the coupling curves for a microsphere with n=1.9 in a 3-Layer silica on silicon structure for various microsphere diameters spanning from 2 µm to 10 µm at NWQD-microsphere distance L=0 µm, 1 µm and 3µm. **Figure 20b** shows representative propagation simulations, over 120 µm length, for specific diameters and distance L=0µm. **Figure 20c** shows in detail the coupling mechanism for the optimum case with maximum coupling with diameter 4 µm and L=0µm over 70 µm propagation length.

## Claims

1. A light coupling system comprising a nanowire, an optical dielectric microelement and a channel optical waveguide, wherein the optical dielectric microelement is placed between the nanowire and the channel optical waveguide and the optical dielectric microelement is configured to enable the light coupling between the nanowire and the channel optical waveguide by the successive steps: ejecting light from the nanowire, illuminating the optical dielectric microelement with the said light in order to produce a photonic nanojet, and finally ejecting the said emitted photonic nanojet into a channel optical waveguide in order to excite channel optical waveguide supported eigenmodes and facilitate light coupling.

2. A light coupling system according to **claim 1** wherein the optical dielectric microelement has a shape selected from a sphere, or a cylinder, or a half-sphere or a half-cylinder, and more preferably the optical dielectric microelement is a microsphere.

3. A light coupling system according to **claim 2** wherein the optical dielectric microelement has a refractive index of any value between 1.5 and 2.5.

4. A light coupling system according to **any of the previous claims** wherein the optical dielectric microelement is a microsphere with a diameter between 2 µm and 45 µm and more preferably between 3 µm and 15 µm.

5. A light coupling system according to **any of the previous claims** that enables light coupling between a nanowire with one or more embedded quantum dots, or without any quantum dots embedded, to a channel optical waveguide.

6. A light coupling system according to **any of the previous claims** wherein the channel optical waveguide is made of Silica, or Silica on Silicon, or Silicon, or Silicon Nitride, or Silicon-on-Insulator, or Polymers, or Tantalum Pentoxide, or Lithium Niobate, or any combination of these materials.

7. A light coupling system according to **any of the previous claims** wherein the channel optical waveguide is having a shape selected from a Ridge, a Rib, a Stripe, or a buried type waveguide.

8. A light coupling system according to **any of the previous claims** where the channel optical waveguide is fabricated by Reactive Ion Etching, Focused Ion Beam Lithography, Electron Beam Lithography, In-diffusion, Direct Laser writing, or any combination of them.

9. A light coupling system according to **any of the previous claims** wherein the nanowire is made of a semiconductor, or a dielectric, or a metallic material.

10. A light coupling system according to **any of the previous claims** wherein the nanowire is made of semiconductor material, preferably with length between 1 µm to 20 µm, diameter between 2 nm and 800 nm, and operates by emitting light of wavelength between 800 nm and 2000 nm.

11. A light coupling system according to **any of the previous claims** wherein the channel optical waveguide is made preferably of silica or doped silica, has a width or diameter between 1 µm and 10 µm, and refractive index difference, compared to pure silica, between 10⁻⁴ and 10⁻¹.

12. A light coupling system according to **any of the previous claims** wherein the distance between the nanowire and the optical dielectric microelement, or the distance between the microsphere and the waveguide is between 0 µm and 30 µm.

13. A method for coupling light from a nanowire to a channel optical waveguide comprising the steps of: i) providing the light coupling system according to **any of the previous claims,** ii) ejecting light from a nanowire, iii) illuminating the dielectric optical microelement with the said light in order to produce a photonic nanojet, and iv) ejecting the said emitted photonic nanojet into a channel optical waveguide in order to excite channel optical waveguide supported eigenmodes and facilitate light coupling.

14. A method **according to claim 13** wherein for a given light coupling system according to **any of the claims 1-12,** it is selected the highest light coupling value from the nanowire to the channel optical waveguide, by ranging the following parameters: i) Size of the optical dielectric microelement, ii) Refractive index of the optical dielectric microelement, iii) Distance between the nanowire and the optical dielectric microelement, iv) Distance between the optical dielectric microelement and the channel optical waveguide.

15. A method according to **claims 13 to 14** where the optical dielectric microelement is a microsphere, with refractive index preferably in the range of 1.5 to 2.5, and with diameter between 2 µm and 45 µm, and more preferably between 3 µm and 15 µm.

16. The use of the light coupling system and the method for coupling light according to **any of the claims 1 to 15** in quantum photonic integrated circuits, or optical quantum computing systems, or quantum communication systems.
